(19) Europäisches Patentamt
European Patent Office
Office européen des brevets

(11) EP 2 126 194 B1

(12) # EUROPÄISCHE PATENTSCHRIFT

(45) Veröffentlichungstag und Bekanntmachung des Hinweises auf die Patenterteilung:
**22.02.2017 Patentblatt 2017/08**

(21) Anmeldenummer: **07857451.4**

(22) Anmeldetag: **12.12.2007**

(51) Int Cl.:
***D06N 3/14*** *(2006.01)* ***C08J 9/00*** *(2006.01)*

(86) Internationale Anmeldenummer:
**PCT/EP2007/063788**

(87) Internationale Veröffentlichungsnummer:
**WO 2008/077786 (03.07.2008 Gazette 2008/27)**

(54) **VERFAHREN ZUR HERSTELLUNG VON BESCHICHTETEN TEXTILIEN, INSBESONDERE KUNSTLEDER**

METHOD OF PRODUCING COATED TEXTILES, MORE PARTICULARLY SYNTHETIC LEATHERS

PROCÉDÉ DE FABRICATION DE TEXTILES ENDUITS, NOTAMMENT DE CUIR SYNTHÉTIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.12.2006 EP 06126971**

(43) Veröffentlichungstag der Anmeldung:
**02.12.2009 Patentblatt 2009/49**

(73) Patentinhaber: **BASF SE**
**67056 Ludwigshafen am Rhein (DE)**

(72) Erfinder:
- **SCHÜTTE, Markus**
**49080 Osnabrück (DE)**
- **MALZ, Hauke**
**49356 Diepholz (DE)**
- **SZARVAS, Laszlo**
**67071 Ludwigshafen (DE)**

(74) Vertreter: **BASF IP Association**
**BASF SE**
**ZRX-C6**
**67056 Ludwigshafen (DE)**

(56) Entgegenhaltungen:
**US-A- 3 000 757** **US-A- 3 526 531**
**US-A- 3 772 059**

EP 2 126 194 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die vorliegende Erfindung betrifft Verfahren zur Herstellung von beschichteten Textilien, insbesondere Kunstleder, wobei man ein textiles Substrat, bevorzugt Gewebe, Gewirke, Vliesstoffe, mit einer Lösung (I) enthaltend Polyurethan, bevorzugt thermoplastisches Polyurethan, beschichtet oder tränkt und anschließend das Polyurethan in oder auf dem textilen Substrat ausfällt, dadurch gekennzeichnet, dass man als Lösung (I) Polyurethan gelöst in ionischer Flüssigkeit einsetzt. Des weiteren betrifft die Erfindung derart erhältliche beschichtete Textilien, insbesondere Kunstleder.

Die Herstellung von Kunstleder durch Beschichten von Textilien mit Kunststoffen ist seit langem bekannt. Kunstleder werden u. a. eingesetzt als Schuhobermaterialien, für Bekleidungsgegenstände, als Täschnermaterial oder z. B. im Polsterbereich. Neben anderen Kunststoffen wie PVC kommt hierbei vor allem Polyurethan als Beschichtungsmaterial zum Einsatz. Die allgemein bekannten Grundlagen zur Beschichtung von Textilien mit Polyurethan sind beschrieben in W. Schröer, Textilveredlung 1987, 22 (12), 459-467. Eine Beschreibung des Koagulationsprozesses findet sich zudem in "New Materials Permeable to Water Vapor", Harro Träubel, Springer Verlag, Berlin, Heidelberg, New York, 1999, ISBN 3-540-64946-8, Seiten 42 bis 63.

Bei der Herstellung von Kunstleder kommen vor allem das Direktstreichverfahren (direkte Beschichtung), das Umkehrverfahren (indirekte Beschichtung) und das Koagulationsverfahren zur Anwendung. Im Gegensatz zum Direktverfahren erfolgt beim Umkehrverfahren die Beschichtung auf einen Zwischenträger mit einem folgenden Kaschierschritt, bei dem eine Vereinigung des Filmes mit dem textilen Träger und die Ablösung vom Zwischenträger (Trennpapier) erfolgt. Das Umkehrverfahren wird vorzugsweise eingesetzt, wenn textile Träger eingesetzt werden, die keine hohen Zugspannungen während der Beschichtung zulassen oder auch wenn offene, nicht besonders dichte Gewebe eingesetzt werden.

Beim Koagulationsverfahren wird üblicherweise ein textiler Träger mit einer Lösung enthaltend Polyurethan (im Folgenden auch als PUR bezeichnet), zumeist thermoplastisches Polyurethan, im Folgenden auch als TPU bezeichnet, in DMF beschichtet. In einem zweiten Schritt wird der beschichtete Träger durch DMF/Wasser-Bäder geführt, wobei der Anteil an Wasser schrittweise erhöht wird. Hierbei kommt es zu einem Ausfällen des PUR und zur Ausbildung eines mikroporösen Filmes. Dabei wird ausgenutzt, das DMF und Wasser exzellent mischbar sind und DMF und Wasser als Löser/Nichtlöser-Paar für PUR dienen. Koagulierte PUR-Beschichtungen werden vor allem für hochwertige Kunstleder eingesetzt, da sie eine vergleichsweise gute Atmungsaktivität sowie Lederhaptik aufweisen. Das Grundprinzip des Koagulationsprozesses beruht auf der Verwendung eines geeigneten Löser/Nichtlöser-Paares für PUR. Der große Vorteil des Koagualtionsverfahrens besteht darin, dass mikroporöse, atmungsaktive Kunstleder mit hervorragendem Leder-Griff erhalten werden können. Beispiele stellen z. B. die Kunstleder-Marken Clarino® oder Alcantara® dar. Ein Nachteil des Koagulationsprozesses stellt die Notwendigkeit der Verwendung von hohen Mengen an DMF als organischem Lösungsmittel dar. Um eine Belastung von Mitarbeitern durch DMF-Emissionen während der Produktion zu minimieren, sind zusätzliche konstruktive Maßnahmen zu ergreifen, die einen nicht unerheblichen Mehraufwand im Vergleich zu den einfacheren Verfahren darstellen. Des weiteren besteht die Notwendigkeit, große Mengen an DMF/Wasser-Mischungen zu entsorgen bzw. aufzuarbeiten. Dies ist problematisch, da Wasser und DMF ein Azeotrop bilden und daher nur unter erhöhtem Aufwand destillativ getrennt werden können.

Die Aufgabe der vorliegenden Erfindung bestand somit darin, ein Verfahren zur Beschichtung von textilen Substraten, insbesondere zur Herstellung von Kunstleder zu entwickeln, bei dem toxikologisch möglichst unbedenkliche, leicht und wirtschaftlich handhabbare Ausgangsstoffe, insbesondere Lösungsmittel eingesetzt werden können. Zudem sollte mit dem Verfahren das Recycling von nicht spezifikationsgerechten Produkten ermöglicht werden. Dabei sollte das Verfahren möglichst einfach und wirtschaftlich betrieben werden können.

Die Aufgaben konnten durch die eingangs dargestellten Verfahren und derart erhältlichen Produkte gelöst werden.

Dabei weist der Einsatz von ionischen Flüssigkeiten als Lösungsmittel folgende Vorteile auf:

a. Ionische Flüssigkeiten sind im allgemeinen geringer toxisch als DMF bzw. überhaupt nicht toxisch.
b. Ionische Flüssigkeiten belasten aufgrund des geringen Dampfdrucks auch bei erhöhten Temperaturen nicht die Umgebungsluft
c. Die vorstehenden Vorteile führen zu einer deutlich geringeren Belastung der Anwender durch flüchtige organische Verbindungen
d. Abtrennung von Wasser ist deutlich erleichtert, da kein Azeotrop gebildet wird
e. Verunreinigungen verbleiben in der Regel in der ionischen Flüssigkeit, so dass ein hochreines Koagulat erhalten werden kann.

Dabei stellen insbesondere die unter (c) und (d) genannten Vorteile signifikante Verarbeitungsvorteile dar.

Ionische Flüssigkeiten sind in der Lage, PUR aufzulösen und können durch Zugabe von Wasser wieder gefällt werden. Ionische Flüssigkeiten bilden kein Azeotrop mit Wasser und könnten daher leichter durch Destillation getrennt

werden. Die Lösungseigenschaften, aber auch Bioabbaubarkeit oder die toxikologischen Eigenschaften von ionischen Flüssigkeiten unterscheiden sich je nach Struktur und können auf die gegebenen Anforderungen optimiert werden.

Die Herstellung der erfindungsgemäßen Lösung (I) kann bevorzugt derart erfolgen, dass man das Polyurethan, bevorzugt das thermoplastische Polyurethan, in der ionischen Flüssigkeit herstellt. Dabei kann die Herstellung des Polyurethan, bevorzugt des thermoplastischen Polyurethans insbesondere durch Umsetzung von (a) Isocyanat mit (b) gegenüber Isocyanaten reaktiven Verbindungen sowie (c) Kettenverlängerer in der ionischen Flüssigkeit erfolgen.

Überraschenderweise hat sich gezeigt, dass ionische Flüssigkeiten so gute Löseeigenschaften haben, dass auch bereits hergestelltes Polyurethan, bevorzugt thermoplastisches Polyurethan, sich in den ionischen Flüssigkeiten wieder lösen lässt. Dementsprechend kann die Lösung (I) auch hergestellt werden durch Lösung von Polyurethan, bevorzugt thermoplastischem Polyurethan, in einer ionischen Flüssigkeit. Hierbei geht man bevorzugt so vor, dass man das Polyurethan, bevorzugt thermoplastisches Polyurethan, in die ionische Flüssigkeit gibt und bei einer Temperatur zwischen 50 und 150 °C, bevorzugt 70 und 130 °C löst. Es ist somit ebenfalls bevorzugt, das Polyurethan, bevorzugt thermoplastische Polyurethan durch Umsetzung von (a) Isocyanat mit (b) gegenüber Isocyanaten reaktiven Verbindungen sowie (c) Kettenverlängerungsmitteln in Substanz, d. h. ohne Lösungsmittel herzustellen und dann mit der ionischen Flüssigkeit zu vermischen. Bevorzugt kann man die Lösung (I) somit auch dadurch erzeugen, indem man Polyurethan, bevorzugt thermoplastisches Polyurethan, in ionischen Flüssigkeiten auflöst.

Dabei können der Mischung enthaltend Polyurethan, bevorzugt thermoplastisches Polyurethan, und ionische Flüssigkeit Hilfsstoffe (e) zugegeben werden.

Das Gewichtsverhältnis von Polyurethan und ionischer Flüssigkeit in der Lösung (I) ist in einem breiten Bereich wählbar und wird hauptsächlich durch die Verarbeitungseigenschaften wie die Viskosität bestimmt. Üblicherweise beträgt das Verhältnis von ionischer Flüssigkeit zu Polyurethan zwischen 20:1 und 1:10, bevorzugt zwischen 10:1 und 1:1, insbesondere bevorzugt zwischen 4:1 und 2:1. Als Lösungsmittel können neben der ionischen Flüssigkeit auch weitere Lösungsmittel, die sich bevorzugt homogen mit der ionischen Flüssigkeit mischen, eingesetzt werden. Bevorzugt wird ausschließlich ionische Flüssigkeit als Lösungsmittel zur Herstellung der Lösung (I) eingesetzt.

Die Herstellung von Polyurethan, bevorzugt thermoplastischem Polyurethan, durch Umsetzung von (a) Isocyanaten mit (b) gegenüber Isocyanaten reaktiven Verbindungen, bevorzugt mit einem zahlenmittleren Molekulargewicht von 500 bis 10000 g/mol, (c) Kettenverlängerungsmitteln mit einem Molekulargewicht von 50 bis 499 g/mol, gegebenenfalls in Gegenwart von (d) Katalysatoren und/oder (e) Hilfsstoffen ist dem Fachmann allgemein bekannt und vielfältig beschrieben.

Das Beschichten des textilen Substrates mit der Lösung (I) enthaltend das Polyurethan gelöst in ionischer Flüssigkeit kann nach allgemein üblichen und bekannten Verfahren erfolgen. Ausgangsstoffe und Verfahren zur Herstellung von Koagulationsleder werden z. B. beschrieben in

- K. Walter, U. Loose, G. Hebestreit, "Herstellung von Polyurethanen in Lösung für die Kunstlederindustrie", Leder Schuhe Lederwaren, 1990, S. 172-177;
- M. Stoll, "Verfahren zur Herstellung poröser Polymerschichten nach dem Koagulationsverfahren", Coating, 1994, S. 9-11;
- W. Schröer, "Die Beschichtung von Textilien mit Polyurethanen", Textilveredlung, 1987, S. 459-467;
- DE 1 110 607.

Die bei der Herstellung der Polyurethane üblicherweise verwendeten Komponenten (a), (b), (c) sowie gegebenenfalls (d) und/oder (e) sollen im Folgenden beispielhaft beschrieben werden.

Als organische Isocyanate (a) können allgemein bekannte aliphatische, cycloaliphatische, araliphatische und/oder aromatische Isocyanate, bevorzugt Diisocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-diisocyanat, IPDI), 1,4-und/oder 1,3-Bis(isocyanatomethyl)cyclohexan (HXDI), 1,4-Cyclohexan-diisocyanat, 1-Methyl-2,4- und/oder-2,6-cyclohexan-diisocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), Diphenylmethandiisocyanat, 3,3'-Dimethyl-diphenyl-diisocyanat, 1,2-Diphenylethandiisocyanat und/oder Phenylendiisocyanat. Bevorzugt wird 4,4'MDI verwendet.

Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten zwischen 500 und 4000 g/mol, bevorzugt zwischen 1000 und 3000 g/mol, insbesondere zwischen 1500 und 2000 g/mol und bevorzugt einer mittleren Funktionalität zwischen 1,8 und 2,3, bevorzugt 1,9 bis 2,2, insbesondere 2.

Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können. Besonders bevorzugt werden als Kettenverlängerungsmittel aliphatische Diamine, insbesondere Ethylendiamin oder Propylendiamin oder Mischungen enthaltend Ethylendiamin und Propylendiamin.

Geeignete Katalysatoren (d), welche insbesondere die Reaktion zwischen den NCO-Gruppen der Diisocyanate (a) und den Hydroxyl- und/oder Aminogruppen der Aufbaukomponenten (b) und (c) beschleunigen, sind die nach dem Stand der Technik bekannten und üblichen tertiären Amine, wie z. B. Triethylamin, Dimethylcyclohexylamin, N-Methylmorpholin, N,N'-Dimethylpiperazin, 2-(Dimethylaminoethoxy)-ethanol, Diazabi-cyclo-(2,2,2)-octan und ähnliche sowie insbesondere organische Metallverbindungen wie Titansäureester, Eisenverbindungen wie z. B. Eisen-(III)-acetylacetonat, Zinnverbindungen, z. B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.

Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Füllstoffe, Flammschutzmittel, Keimbildungsmittel, Oxidationsstabilisatoren, Gleit- und Entformungshilfen, Farbstoffe und Pigmente, gegebenenfalls zusätzlich zu den erfindungsgemäßen Stabilisatorengemisch weitere Stabilisatoren, z. B. gegen Hydrolyse, Licht, Hitze oder Verfärbung, anorganische und/oder organische Füllstoffe, Verstärkungsmittel und Weichmacher. In einer bevorzugten Ausführungsform fallen unter die Komponente (e) auch Hydrolyseschutzmittel wie beispielsweise polymere und niedermolekulare Carbodiimide. In einer weiteren Ausführungsform kann das TPU eine Phosphorverbindung enthalten. In einer bevorzugten Ausführungsform werden als Phosphorverbindungen Organophosphorverbindungen des trivalenten Phosphors, wie beispielsweise Phosphite und Phosphonite, verwendet. Beispiele für geeignete Phosphorverbindungen sind, Triphenyl phosphit, Diphenylalkylphosphit, Phenyldialkylphosphit, Tris-(nonylphenyl) phosphit, Trilaurylphosphit, Trioctadecylphosphit, Di-stearyl-pentaerythritol diphosphit, Tris-(2,4-di-tert-butylphenyl) phosphit, Di-isodecylpentaerythritol diphosphit, Di-(2,4-di-tert-butylphenyl)-pentaerythritol diphosphit, Tristearyl-sorbitol triphosphit, Tetrakis-(2,4-di-tert-butylphenyl) 4,4'-diphenylylenediphosphonit, Trisisodecylphosphit, Diisodecylphenylphosphit und Diphenylisodecylphosphit oder Gemische daraus.

Neben den genannten Komponenten (a), (b) und (c) sowie gegebenenfalls (d) und (e) können auch Kettenregler, üblicherweise mit einem Molekulargewicht von 31 bis 499, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente (c).

Alle in dieser Schrift genannten Molekulargewichte weisen die Einheit [g/mol] auf.

Bevorzugt basiert das Polyurethan auf der Umsetzung von (a) Isocyanat, bevorzugt 4,4'-MDI, mit (b) gegenüber Isocyanaten reaktiven Verbindungen mit einem Molekulargewicht zwischen 500 g/mol und 10000 g/mol, sowie (c) Kettenverlängerungsmitteln bevorzugt mit einem Molekulargewicht zwischen 50 und 499 g/mol, bevorzugt aliphatische Diamine, besonders bevorzugt Ethylendiamin und/oder Propylendiamin, gegebenenfalls in Gegenwart von (d) Katalysatoren und/oder (e) Hilfsstoffen.

Zur Einstellung von Härte des Polyurethans können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10:1 bis 1:10, insbesondere von 1:1 bis 1:4, wobei die Härte der Polyurethane mit zunehmendem Gehalt an (c) ansteigt.

Die Umsetzung kann bei üblichen Kennzahlen erfolgen, bevorzugt bei einer Kennzahl von 900 bis 1100, besonders bevorzugt bei einer Kennzahl von 950 bis 1050. Die Kennzahl ist definiert durch das Verhältnis der insgesamt bei der Umsetzung eingesetzten Isocyanatgruppen der Komponente (a) zu den gegenüber Isocyanaten reaktiven Gruppen, d. h. den aktiven Wasserstoffen, der Komponenten (b) und (c). Bei einer Kennzahl von 100 kommt auf eine Isocyanatgruppe der Komponente (a) ein aktives Wasserstoffatom, d. h. eine gegenüber Isocyanaten reaktive Funktion, der Komponenten (b) und (c). Bei Kennzahlen über 1000 liegen mehr Isocyanatgruppen als OH-Gruppen vor.

Ionische Flüssigkeiten sind allgemein bekannt und vielfältig beschrieben. Bevorzugt werden unter dem Ausdruck "ionische Flüssigkeiten" Verbindungen, bevorzugt organische Verbindungen verstanden, die mindestens ein Kation und mindestens ein Anion enthalten, und wobei mindestens ein Kation und/oder mindestens ein Anion einen organischen Rest enthält.

Vorzugsweise besitzen die ionischen Flüssigkeiten einen Schmelzpunkt von weniger als 180 °C. Besonders bevorzugt liegt der Schmelzpunkt in einem Bereich von -50 °C bis 150 °C, insbesondere im Bereich von -20 °C bis 120 °C, insbesondere bevorzugt unter 100 °C.

Ionische Flüssigkeiten im Sinne der vorliegenden Erfindung sind Salze der allgemeinen Formel

(A) Salze der allgemeinen Formel (I)

$$[A]_n^+ \ [Y]^{n-} \qquad (I),$$

in der n für 1, 2, 3 oder 4 steht, $[A]^+$ für ein quartäres Ammonium-Kation, ein Oxonium-Kation, ein Sulfonium-Kation oder ein Phosphonium-Kation und $[Y]^{n-}$ für ein ein-, zwei-, drei- oder vierwertiges Anion steht; oder

(B) gemischte Salze der allgemeinen Formeln (II)

$$[A^1]^+[A^2]^+ \ [Y]^{n-} \qquad (IIa),$$

wobei n = 2;

$$[A^1]^+[A^2]^+[A^3]^+ \ [Y]^{n-} \qquad (IIb),$$

wobei n = 3; oder

$$[A^1]^+[A^2]^+[A^3]^+[A^4]^+ \ [Y]^{n-} \qquad (IIc),$$

wobei n = 4 und
wobei $[A^1]^+$, $[A^2]^+$, $[A^3]^+$ und $[A^4]^+$ unabhängig voneinander aus den für $[A]^+$ genannten Gruppen ausgewählt sind und $[Y]^{n-}$ die unter (A) genannte Bedeutung besitzt; oder

(C) gemischte Salze der allgemeinen Formeln (III)

$$[A^1]^+[A^2]^+[A^3]^+[M^1]^+ \ [Y]^{n-} \qquad (IIIa),$$

wobei n = 4;

$$[A^1]^+[A^2]^+[M^1]^+[M^2]^+ \ [Y]^{n-} \qquad (IIIb),$$

wobei n = 4;

$$[A^1]^+[M^1]^+[M^2]^+[M^3]^+ \ [Y]^{n-} \qquad (IIIc),$$

wobei n = 4;

$$[A^1]^+[A^2]^+[M^1]^+ \ [Y]^{n-} \qquad (IIId),$$

wobei n = 3;

$$[A^1]^+[M^1]^+[M^2]^+ \ [Y]^{n-} \qquad (IIIe),$$

wobei n = 3;

$$[A^1]^+[M^1]^+ \ [Y]^{n-} \qquad (IIIf),$$

wobei n = 2;

$$[A^1]^+[A^2]^+[M^4]^{2-} \ [Y]^{n-} \qquad (IIIg),$$

wobei n = 4;

$$[A^1]^+[M^1]^+[M^4]^{2+} \ [Y]^{n-} \qquad (IIIh),$$

wobei n = 4;

$$[A^1]^+[M^5]^{3+}\ [Y]^{n-} \qquad \text{(IIIi)},$$

wobei n = 4; oder

$$[A^1]^+[M^4]^{2+}\ [Y]^{n-} \qquad \text{(IIIj)},$$

wobei n = 3 und
wobei $[A^1]^+$, $[A^2]^+$ und $[A^3]^+$ unabhängig voneinander aus den für $[A]^+$ genannten Gruppen ausgewählt sind, $[Y]^{n-}$ die unter (A) genannte Bedeutung besitzt und $[M^1]^+$, $[M^2]^+$, $[M^3]^+$ einwertige Metallkationen, $[M^4]^{2+}$ zweiwertige Metallkationen und $[M^5]^{3+}$ dreiwertige Metallkationen bedeuten.

Verbindungen, die sich zur Bildung des Kations $[A]^+$ von ionischen Flüssigkeiten eignen, sind z. B. aus DE 102 02 838 A1 bekannt. So können solche Verbindungen Sauerstoff-, Phosphor-, Schwefel- oder insbesondere Stickstoffatome enthalten, beispielsweise mindestens ein Stickstoffatom, bevorzugt 1-10 Stickstoffatome, besonders bevorzugt 1-5, ganz besonders bevorzugt 1-3 und insbesondere 1-2 Stickstoffatome. Gegebenenfalls können auch weitere Heteroatome wie Sauerstoff-, Schwefel- oder Phosphoratome enthalten sein. Das Stickstoffatom ist ein geeigneter Träger der positiven Ladung im Kation der ionischen Flüssigkeit, von dem im Gleichgewicht dann ein Proton bzw. ein Alkylrest auf das Anion übergehen kann, um ein elektrisch neutrales Molekül zu erzeugen.

Für den Fall, dass das Stickstoffatom der Träger der positiven Ladung im Kation der ionischen Flüssigkeit ist, kann bei der Synthese der ionischen Flüssigkeiten zunächst durch Quaternisierung am Stickstoffatom etwa eines Amins oder Stickstoff-Hetero-cyclus' ein Kation erzeugt werden. Die Quaternisierung kann durch Alkylierung des Stickstoffatoms erfolgen. Je nach verwendetem Alkylierungsreagens werden Salze mit unterschiedlichen Anionen erhalten. In Fällen, in denen es nicht möglich ist, das gewünschte Anion bereits bei der Quaternisierung zu bilden, kann dies in einem weiteren Syntheseschritt erfolgen. Ausgehend beispielsweise von einem Ammoniumhalogenid kann das Halogenid mit einer Lewissäure umgesetzt werden, wobei aus Halogenid und Lewissäure ein komplexes Anion gebildet wird. Alternativ dazu ist der Austausch eines Halogenidions gegen das gewünschte Anion möglich. Dies kann durch Zugabe eines Metallsalzes unter Ausfällung des gebildeten Metallhalogenids, über einen Ionenaustauscher oder durch Verdrängung des Halogenidions durch eine starke Säure (unter Freisetzung der Halogenwasserstoffsäure) geschehen. Geeignete Verfahren sind beispielsweise in Angew. Chem. 2000, 112, S. 3926 - 3945 und der darin zitierten Literatur beschrieben.

Geeignete Alkylreste, mit denen das Stickstoffatom in den Aminen oder Stickstoff-Heterocyclen beispielsweise quaternisiert sein kann, sind $C_1$-$C_{18}$-Alkyl, bevorzugt $C_1$-$C_{10}$-Alkyl, besonders bevorzugt $C_1$-$C_6$-Alkyl und ganz besonders bevorzugt Methyl. Die Alkylgruppe kann unsubstituiert sein oder einen oder mehrere gleiche oder verschiedene Substituenten aufweisen.

Bevorzugt sind solche Verbindungen, die mindestens einen fünf- bis sechsgliedrigen Heterocyclus, insbesondere einen fünfgliedrigen Heterocyclus, enthalten, der mindestens ein Stickstoffatom sowie gegebenenfalls ein Sauerstoff- oder Schwefelatom aufweist, besonders bevorzugt sind solche Verbindungen, die mindestens einen fünf- bis sechsgliedrigen Heterocyclus enthalten, der ein, zwei oder drei Stickstoffatome und ein Schwefel- oder ein Sauerstoffatom aufweist, ganz besonders bevorzugt solche mit zwei Stickstoffatomen. Weiterhin bevorzugt sind aromatische Heterocyclen.

Besonders bevorzugte Verbindungen sind solche, die ein Molgewicht unter 1000 g/mol aufweisen, ganz besonders bevorzugt unter 500 g/mol.

Weiterhin sind solche Kationen bevorzugt, die ausgewählt sind aus den Verbindungen der Formeln (IVa) bis (IVw),

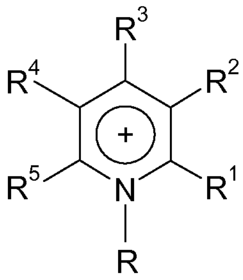 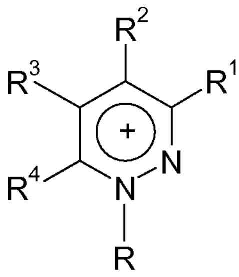 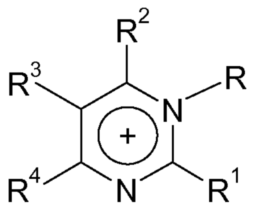

(IVa) (IVb) (IVc)

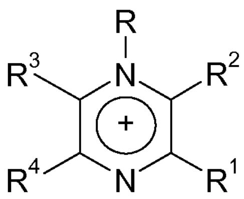 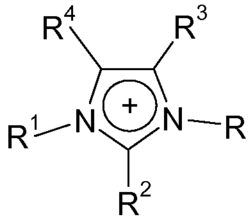 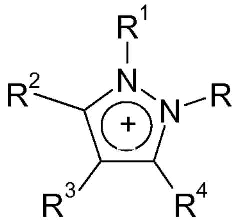

(IVd) (IVe) (IVf)

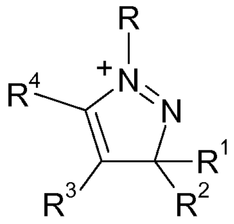 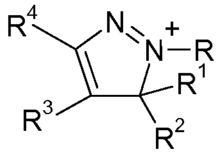 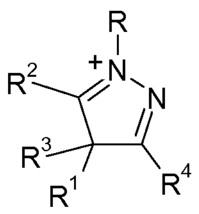

(IVg) (IVg') (IVh)

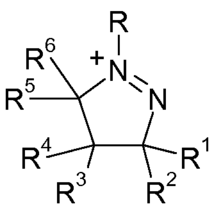 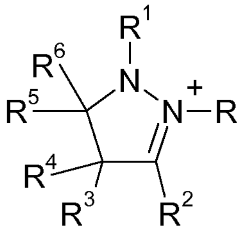 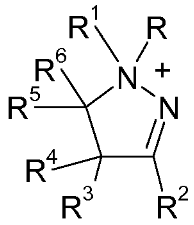

(IVi) (IVj) (IVj')

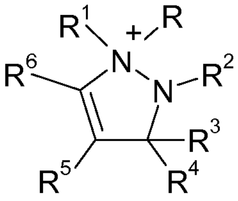 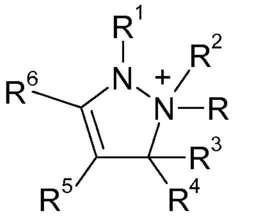 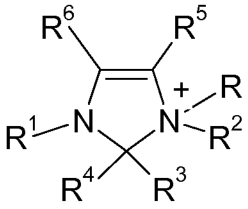

(IVk) (IVk') (IVl)

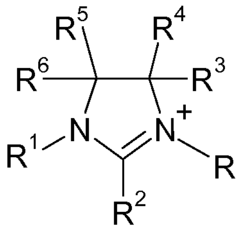

(IVm)

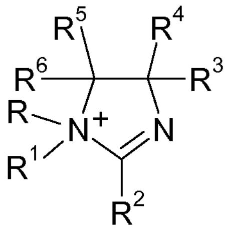

(IVm')

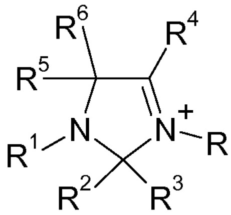

(IVn)

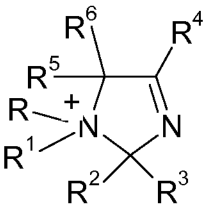

(IVn')

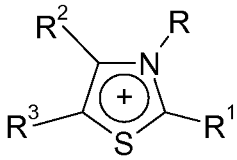

(IVo)

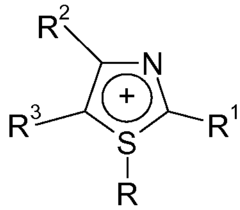

(IVo')

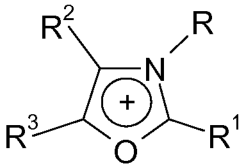

(IVp)

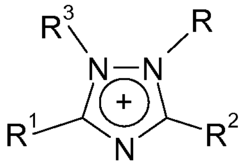

(IVq)

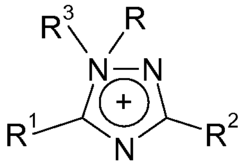

(IVq')

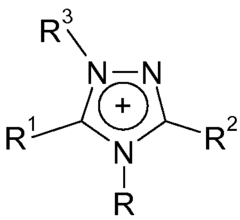

(IVq")

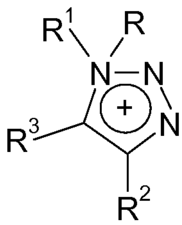

(IVr)

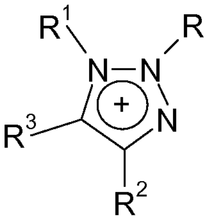

(IVr')

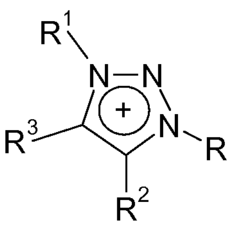

(IVr")

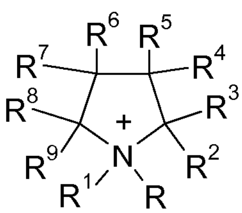

(IVs)

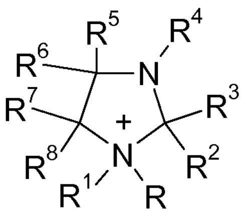

(IVt)

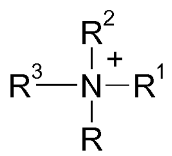 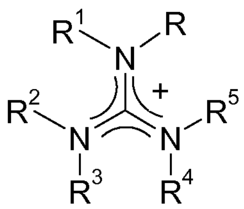 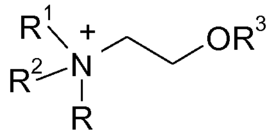

(IVu) (IVv) (IVw)

sowie Oligomere, die diese Strukturen enthalten.

Weitere geeignete Kationen sind Verbindungen der allgemeinen Formel (IVx) und (IVy)

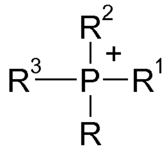 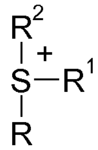

(IVx) (IVy)

sowie Oligomere, die diese Struktur enthalten.

In den oben genannten Formeln (IVa) bis (IVy) stehen

- der Rest R für Wasserstoff, einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen; und

- die Reste $R^1$ bis $R^9$ unabhängig voneinander für Wasserstoff, eine Sulfo-Gruppe oder einen Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 20 Kohlenstoffatomen, wobei die Reste $R^1$ bis $R^9$, welche in den oben genannten Formeln (IV) an ein Kohlenstoffatom (und nicht an ein Heteroatom) gebunden sind, zusätzlich auch für Halogen oder eine funktionelle Gruppe stehen können; oder

- zwei benachbarte Reste aus der Reihe $R^1$ bis $R^9$ zusammen auch für einen zweibindigen, Kohlenstoff enthaltenden organischen, gesättigten oder ungesättigten, acyclischen oder cyclischen, aliphatischen, aromatischen oder araliphatischen, unsubstituierten oder durch 1 bis 5 Heteroatome oder geeignete funktionelle Gruppen unterbrochenen oder substituierten Rest mit 1 bis 30 Kohlenstoffatomen.

Als Heteroatome kommen bei der Definition der Reste R und $R^1$ bis $R^9$ prinzipiell alle Heteroatome in Frage, welche in der Lage sind, formell eine $-CH_2-$, eine -CH=, eine -C≡ oder eine =C= -Gruppe zu ersetzen. Enthält der Kohlenstoff enthaltende Rest Heteroatome, so sind Sauerstoff, Stickstoff, Schwefel, Phosphor und Silizium bevorzugt. Als bevorzugte Gruppen seien insbesondere -O-, -S-, -SO-, $-SO_2-$, -NR'-, -N=, -PR'-, $-PR'_2$ und $-SiR'_2-$ genannt, wobei es sich bei den Resten R' um den verbleibenden Teil des Kohlenstoff enthaltenden Rests handelt. Die Reste $R^1$ bis $R^9$ können dabei in den Fällen, in denen diese in den oben genannten Formeln (IV) an ein Kohlenstoffatom (und nicht an ein Heteroatom) gebunden sind, auch direkt über das Heteroatom gebunden sein.

Als funktionelle Gruppen kommen prinzipiell alle funktionellen Gruppen in Frage, welche an ein Kohlenstoffatom oder ein Heteroatom gebunden sein können. Als geeignete Beispiele seien $-NR_2'$, und -CN (Cyano) genannt. Funktionelle Gruppen und Heteroatome können auch direkt benachbart sein, so dass auch Kombinationen aus mehreren benachbarten Atomen, wie etwa -O- (Ether), -S- (Thioether), -COO- (Ester), oder -CONR'- (tertiäres Amid), mit umfasst sind, beispielsweise Di-($C_1$-$C_4$-Alkyl)-amino, $C_1$-$C_4$-Alkyloxycarbonyl oder $C_1$-$C_4$-Alkyloxy. Bei den Resten R' handelt es sich um den verbleibenden Teil des Kohlenstoff enthaltenden Restes.

Als Halogene seien Fluor, Chlor, Brom und Iod genannt.

Bevorzugt steht der Rest R für

- unverzweigtes oder verzweigtes, unsubstituiertes oder ein bis mehrfach mit Halogen, Phenyl, Cyano, substituiertes $C_1$-$C_{18}$-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl und Undecylfluorisopentyl;

- Glykole, Butylenglykole und deren Oligomere mit 1 bis 100 Einheiten und einem $C_1$-$C_8$-Alkyl als Endgruppe, wie beispielsweise $R^AO-(CHR^B-CH_2-O)_n-CHR^B-CH_2-$ oder $R^AO-(CH_2CH_2CH_2CH_2O)_n-CH_2CH_2CH_2CH_2O-$ mit $R^A$ und $R^B$ bevorzugt Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;

- Vinyl;

- 1-Propen-1-yl, 1-Propen-2-yl und 1-Propen-3-yl; und

- N,N-Di-$C_1$-$C_6$-alkyl-amino, wie beispielsweise N,N-Dimethylamino und N,N-Diethylamino.

Besonders bevorzugt steht der Rest R für unverzweigtes und unsubstituiertes $C_1$-$C_{18}$-Alkyl, wie beispielsweise Methyl, Ethyl, 1-Propyl, 1-Butyl, 1-Pentyl, 1-Hexyl, 1-Heptyl, 1-Octyl, 1-Decyl, 1-Dodecyl, 1-Tetradecyl, 1-Hexadecyl, 1-Octadecyl, insbesondere für Methyl, Ethyl, 1-Butyl und 1-Octyl sowie für $CH_3O-(CH_2CH_2O)_n-CH_2CH_2-$ und $CH_3CH_2O-(CH_2CH_2O)_n-CH_2CH_2-$ mit n gleich 0 bis 3.

Bevorzugt stehen die Reste $R^1$ bis $R^9$ unabhängig voneinander für

- Wasserstoff;

- Halogen;

- eine geeignete funktionelle Gruppe;

- gegebenenfalls durch geeignete funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes $C_1$-$C_{18}$-Alkyl;

- gegebenenfalls durch geeignete funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes $C_2$-$C_{18}$-Alkenyl;

- gegebenenfalls durch geeignete funktionelle Gruppen, Aryl, Alkyl, Aryloxy, Alkyloxy, Halogen, Heteroatome und/oder Heterocyclen substituiertes $C_6$-$C_{12}$-Aryl;

- gegebenenfalls durch geeignete funktionelle Gruppen, Aryl, Alkyl, Aryloxy, Alkyloxy, Halogen, Heteroatome und/oder Heterocyclen substituiertes $C_5$-$C_{12}$-Cyclo-alkyl;

- gegebenenfalls durch geeignete funktionelle Gruppen, Aryl, Alkyl, Aryloxy, Alkyloxy, Halogen, Heteroatome und/oder Heterocyclen substituiertes $C_5$-$C_{12}$-Cyclo-alkenyl; oder

- einen gegebenenfalls durch geeignete funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus bedeuten; oder

zwei benachbarte Reste zusammen mit den Atomen, an welchen sie gebunden sind, für

- einen ungesättigten, gesättigten oder aromatischen, gegebenenfalls durch geeignete funktionelle Gruppen, Aryl,

Alkyl, Aryloxy, Alkyloxy, Halogen, Heteroatome und/oder Heterocyclen substituierten und gegebenenfalls durch ein oder mehrere Sauerstoff- und/oder Schwefelatome und/oder ein oder mehrere substituierte oder unsubstituierte Iminogruppen unterbrochenen Ring.

Bei gegebenenfalls durch geeignete funktionelle Gruppen, Aryl, Alkyl, Aryloxy, Alkyloxy, Halogen, Heteroatome und/oder Heterocyclen substituiertem $C_1$-$C_{18}$-Alkyl handelt es sich bevorzugt um Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, Heptyl, Octyl, 2-Etylhexyl, 2,4,4-Trimethylpentyl, 1,1,3,3-Tetramethylbutyl, 1-Nonyl, 1-Decyl, 1-Undecyl, 1-Dodecyl, 1-Tridecyl, 1-Tetradecyl, 1-Pentadecyl, 1-Hexadecyl, 1-Heptadecyl, 1-Octadecyl, Cyclopentylmethyl, 2-Cyclopentylethyl, 3-Cyclopentylpropyl, Cyclohexylmethyl, 2-Cyclohexylethyl, 3-Cyclohexylpropyl, Benzyl (Phenylmethyl), Diphenylmethyl (Benzhydryl), Triphenylmethyl, 1-Phenylethyl, 2-Phenylethyl, 3-Phenylpropyl, $\alpha,\alpha$-Dimethylbenzyl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, Methoxy, Ethoxy, 1,3-Dioxolan-2-yl, 1,3-Dioxan-2-yl, 2-Methyl-1,3-dioxolan-2-yl, 4-Methyl-1,3-dioxolan-2-yl, 2-Dimethylaminoethyl, 2-Dimethylaminopropyl, 3-Dimethylaminopropyl, 4-Dimethylaminobutyl, 6-Dimethylaminohexyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl, 6-Ethoxyhexyl, $C_nF_{2(n-a)+(1-b)}H_{2a+b}$ mit n gleich 1 bis 30, $0 \leq a \leq n$ und b = 0 oder 1 (beispielsweise $CF_3$, $C_2F_5$, $CH_2CH_2$-$C_{(n-2)}F_{2(n-2)+1}$, $C_6F_{13}$, $C_8F_{17}$, $C_{10}F_{21}$, $C_{12}F_{25}$), Chlormethyl, 2-Chlorethyl, Trichlormethyl, 1,1-Dimethyl-2-chlorethyl, Methoxymethyl, 2-Butoxyethyl, Diethoxymethyl, Diethoxyethyl, 2-Isopropoxyethyl, 2-Butoxypropyl, 2-Octyloxyethyl, 2-Methoxyisopropyl, 2-(Methoxycarbonyl)-methyl, 2-(Ethoxycarbonyl)-methyl, 2-(n-Butoxycarbonyl)-methyl, Butylthiomethyl, 2-Dodecylthioethyl, 2-Phenylthioethyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-dioxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Bei gegebenenfalls durch geeignete funktionelle Gruppen, Aryl, Alkyl, Aryloxy, Alkyloxy, Halogen, Heteroatome und/oder Heterocyclen substituiertes und/oder durch ein oder mehrere Sauerstoff- und/oder Schwefelatome und/oder ein oder mehrere substituierte oder unsubstituierte Iminogruppen unterbrochenes $C_2$-$C_{18}$-Alkenyl handelt es sich bevorzugt um Vinyl, 2-Propenyl, 3-Butenyl, cis-2-Butenyl, trans-2-Butenyl oder $CnF_{2(n-a)-(1-b)}H_{2a-b}$ mit $n \leq 30$, $0 \leq a \leq n$ und b = 0 oder 1.

Bei gegebenenfalls durch geeignete funktionelle Gruppen, Aryl, Alkyl, Aryloxy, Alkyloxy, Halogen, Heteroatome und/oder Heterocyclen substituiertes $C_6$-$C_{12}$-Aryl handelt es sich bevorzugt um Phenyl, Tolyl, Xylyl, $\alpha$-Naphthyl, $\beta$-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2-Nitrophenyl, 4-Nitrophenyl, 2,4-Dinitrophenyl, 2,6-Dinitrophenyl, 4-Dimethylaminophenyl, 4-Acetylphenyl, Methoxyethylphenyl, Ethoxymethylphenyl, Methylthiophenyl, Isopropylthiophenyl oder tert.-Butylthiophenyl oder $C_6F_{(5-a)}H_a$ mit $0 \leq a \leq 5$.

Bei gegebenenfalls durch geeignete funktionelle Gruppen, Aryl, Alkyl, Aryloxy, Alkyloxy, Halogen, Heteroatome und/oder Heterocyclen substituiertes $C_5$-$C_{12}$-Cycloalkyl handelt es sich bevorzugt um Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl, $C_nF_{2(n-a)-(1-b)}H_{2a-b}$ mit $n \leq 30$, $0 \leq a \leq n$ und b = 0 oder 1 sowie ein gesättigtes oder ungesättigtes bicyclisches System wie z. B. Norbornyl oder Norbornenyl.

Bei gegebenenfalls durch geeignete funktionelle Gruppen, Aryl, Alkyl, Aryloxy, Alkyloxy, Halogen, Heteroatome und/oder Heterocyclen substituiertes $C_5$-$C_{12}$-Cycloalkenyl handelt es sich bevorzugt um 3-Cyclopentenyl, 2-Cyclohexenyl, 3-Cyclohexenyl, 2,5-Cyclohexadienyl oder $C_nF_{2(n-a)-3(1-b)}H_{2a-3b}$ mit $n \leq 30$, $0 \leq a \leq n$ und b = 0 oder 1.

Bei einen gegebenenfalls durch geeignete funktionelle Gruppen, Aryl, Alkyl, Aryloxy, Alkyloxy, Halogen, Heteroatome und/oder Heterocyclen substituierten fünf- bis sechsgliedrigen, Sauerstoff-, Stickstoff- und/oder Schwefelatome aufweisenden Heterocyclus handelt es sich bevorzugt um Furyl, Thiophenyl, Pyrryl, Pyridyl, Indolyl, Benzoxazolyl, Dioxolyl, Dioxyl, Benzimidazolyl, Benzthiazolyl, Dimethylpyridyl, Methylchinolyl, Dimethylpyrryl, Methoxyfuryl, Dimethoxypyridyl oder Difluorpyridyl.

Bilden zwei benachbarte Reste gemeinsam einen ungesättigten, gesättigten oder aromatischen, gegebenenfalls durch geeignete funktionelle Gruppen, Aryl, Alkyl, Aryloxy, Alkyloxy, Halogen, Heteroatome und/oder Heterocyclen

substituierten und gegebenenfalls durch ein oder mehrere Sauerstoff- und/oder Schwefelatome und/oder ein oder mehrere substituierte oder unsubstituierte Iminogruppen unterbrochenen Ring, so handelt es sich bevorzugt um 1,3-Propylen, 1,4-Butylen, 1,5-Pentylen, 2-Oxa-1,3-propylen, 1-Oxa-1,3-propylen, 2-Oxa-1,3-propylen, 1-Oxa-1,3-propenylen, 3-Oxa-1,5-pentylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen.

Enthalten die oben genannten Reste Sauerstoff- und/oder Schwefelatome und/oder substituierte oder unsubstituierte Iminogruppen, so ist die Anzahl der Sauerstoff- und/oder Schwefelatome und/oder Iminogruppen nicht beschränkt. In der Regel beträgt sie nicht mehr als 5 in dem Rest, bevorzugt nicht mehr als 4 und ganz besonders bevorzugt nicht mehr als 3.

Enthalten die oben genannten Reste Heteroatome, so befinden sich zwischen zwei Heteroatomen in der Regel mindestens ein Kohlenstoffatom, bevorzugt mindestens zwei Kohlenstoffatome.

Besonders bevorzugt stehen die Reste $R^1$ bis $R^9$ unabhängig voneinander für

- Wasserstoff;
- unverzweigtes oder verzweigtes, unsubstituiertes oder ein bis mehrfach mit Halogen, Phenyl, Cyano und/oder $C_1$-$C_6$-Alkoxycarbonyl substituiertes $C_1$-$C_{18}$-Alkyl mit insgesamt 1 bis 20 Kohlenstoffatomen, wie beispielsweise Methyl, Ethyl, 1-Propyl, 2-Propyl, 1-Butyl, 2-Butyl, 2-Methyl-1-propyl (Isobutyl), 2-Methyl-2-propyl (tert.-Butyl), 1-Pentyl, 2-Pentyl, 3-Pentyl, 2-Methyl-1-butyl, 3-Methyl-1-butyl, 2-Methyl-2-butyl, 3-Methyl-2-butyl, 2,2-Dimethyl-1-propyl, 1-Hexyl, 2-Hexyl, 3-Hexyl, 2-Methyl-1-pentyl, 3-Methyl-1-pentyl, 4-Methyl-1-pentyl, 2-Methyl-2-pentyl, 3-Methyl-2-pentyl, 4-Methyl-2-pentyl, 2-Methyl-3-pentyl, 3-Methyl-3-pentyl, 2,2-Dimethyl-1-butyl, 2,3-Dimethyl-1-butyl, 3,3-Dimethyl-1-butyl, 2-Ethyl-1-butyl, 2,3-Dimethyl-2-butyl, 3,3-Dimethyl-2-butyl, 1-Heptyl, 1-Octyl, 1-Nonyl, 1-Decyl, 1-Undecyl, 1-Dodecyl, 1-Tetradecyl, 1-Hexadecyl, 1-Octadecyl, Benzyl, 3-Phenylpropyl, 2-Cyanoethyl, 2-(Methoxycarbonyl)-ethyl, 2-(Ethoxycarbonyl)-ethyl, 2-(n-Butoxy-carbonyl)-ethyl, Trifluormethyl, Difluormethyl, Fluormethyl, Pentafluorethyl, Heptafluorpropyl, Heptafluorisopropyl, Nonafluorbutyl, Nonafluorisobutyl, Undecylfluorpentyl und Undecylfluorisopentyl;
- Glykole, Butylenglykole und deren Oligomere mit 1 bis 100 Einheiten und einem $C_1$- bis $C_8$-Alkyl als Endgruppe, wie beispielsweise $R^AO-(CHR^B-CH_2-O)_n-CHR^B-CH_2-$ oder $R^AO-(CH_2CH_2CH_2CH_2O)_n-CH_2CH_2CH_2CH_2O-$ mit $R^A$ und $R^B$ bevorzugt Methyl oder Ethyl und n bevorzugt 0 bis 3, insbesondere 3-Oxabutyl, 3-Oxapentyl, 3,6-Dioxaheptyl, 3,6-Dioxaoctyl, 3,6,9-Trioxadecyl, 3,6,9-Trioxaundecyl, 3,6,9,12-Tetraoxatridecyl und 3,6,9,12-Tetraoxatetradecyl;
- Vinyl;
- 1-Propen-1yl, 1-Propen-2-yl und 1-Propen-3yl; und
- N,N-Di-$C_1$-$C_6$-alkyl-amino, wie beispielsweise N,N-Dimethylamino und N,N-Diethylamino,

wobei wenn IIIw für III steht, dann steht $R^3$ nicht für Wasserstoff.

Ganz besonders bevorzugt stehen die Reste $R^1$ bis $R^9$ unabhängig voneinander für Wasserstoff oder $C_1$-$C_{18}$-Alkyl, wie beispielsweise Methyl, Ethyl, 1-Butyl, 1-Pentyl, 1-Hexyl, 1-Heptyl, 1-Octyl, für Phenyl, für 2-Cyanoethyl, für 2-(Methoxycarbonyl)ethyl, für 2-(Ethoxycarbonyl)ethyl, für 2-(n-Butoxycarbonyl)ethyl, für N,N-Dimethylamino, für N,N-Diethylamino, für Chlor sowie für $CH_3O-(CH_2CH_2O)_n-CH_2CH_2-$ und $CH_3CH_2O-(CH_2CH_2O)_n-CH_2CH_2-$ mit n gleich 0 bis 3, wobei wenn IIIw für III steht, dann steht $R^3$ nicht für Wasserstoff.

Ganz besonders bevorzugt setzt man als Pyridiniumionen (IVa) solche ein, bei denen

- einer der Reste $R^1$ bis $R^5$ Methyl, Ethyl oder Chlor ist und die verbleibenden Reste $R^1$ bis $R^5$ Wasserstoff sind;
- $R^3$ Dimethylamino ist und die verbleibenden Reste $R^1$, $R^2$, $R^4$ und $R^5$ Wasserstoff sind;
- alle Reste $R^1$ bis $R^5$ Wasserstoff sind;
- $R^1$ und $R^2$ oder $R^2$ und $R^3$ 1,4-Buta-1,3-dienylen ist und die verbleibenden Reste $R^1$, $R^2$, $R^4$ und $R^5$ Wasserstoff sind;

und insbesondere solche, bei denen

- $R^1$ bis $R^5$ Wasserstoff sind; oder

- einer der Reste $R^1$ bis $R^5$ Methyl oder Ethyl ist und die verbleibenden Reste $R^1$ bis $R^5$ Wasserstoff sind.

Als ganz besonders bevorzugte Pyridiniumionen (IVa) seien genannt 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium, 1-(1-Butyl)-2-ethylpyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium und 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium und 1-(1-Hexadecyl)-2-methyl-3-ethyl-pyridinium.

Ganz besonders bevorzugt setzt man als Pyridaziniumionen (IVb) solche ein, bei denen

- $R^1$ bis $R^4$ Wasserstoff sind; oder
- einer der Reste $R^1$ bis $R^4$ Methyl oder Ethyl ist und die verbleibenden Reste $R^1$ bis $R^4$ Wasserstoff sind.

Ganz besonders bevorzugt setzt man als Pyrimidiniumionen (IVc) solche ein, bei denen

- $R^1$ Wasserstoff, Methyl oder Ethyl ist und $R^2$ bis $R^4$ unabhängig voneinander Wasserstoff oder Methyl sind; oder
- $R^1$ Wasserstoff, Methyl oder Ethyl ist, $R^2$ und $R^4$ Methyl sind und $R^3$ Wasserstoff ist.

Ganz besonders bevorzugt setzt man als Pyraziniumionen (IVd) solche ein, bei denen

- $R^1$ Wasserstoff, Methyl oder Ethyl ist und $R^2$ bis $R^4$ unabhängig voneinander Wasserstoff oder Methyl sind;
- $R^1$ Wasserstoff, Methyl oder Ethyl ist, $R^2$ und $R^4$ Methyl sind und $R^3$ Wasserstoff ist;
- $R^1$ bis $R^4$ Methyl sind; oder
- $R^1$ bis $R^4$ Wasserstoff sind.

Ganz besonders bevorzugt setzt man als Imidazoliumionen (IVe) solche ein, bei denen

- $R^1$ Wasserstoff, Methyl, Ethyl, 1-Propyl, 1-Butyl, 1-Pentyl, 1-Hexyl, 1-Octyloder 2-Cyanoethyl und $R^2$ bis $R^4$ unabhängig voneinander Wasserstoff, Methyl oder Ethyl sind.

Als ganz besonders bevorzugte Imidazoliumionen (IVe) seien genannt 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Butyl)-3-ethylimidazolium, 1-(1-Hexyl)-3-methyl-imidazolium, 1-(1-Hexyl)-3-ethylimidazolium, 1-(1-Hexyl)-3-butyl-imidazolium, 1-(1-Octyl)-3-methylimidazolium, 1-(1-Octyl)-3-ethylimidazolium, 1-(1-Octyl)-3-butylimidazolium, 1-(1-Dodecyl)-3-methylimidazolium, 1-(1-Dodecyl)-3-ethylimidazolium, 1-(1-Dodecyl)-3-butylimidazolium, 1-(1-Dodecyl)-3-octylimidazolium, 1-(1-Tetradecyl)-3-methylimidazolium, 1-(1-Tetradecyl)-3-ethylimidazolium, 1-(1-Tetradecyl)-3-butylimidazolium, 1-(1-Tetradecyl)-3-octylimidazolium, 1-(1-Hexadecyl)-3-methylimidazolium, 1-(1-Hexadecyl)-3-ethylimidazolium, 1-(1-Hexadecyl)-3-butylimidazolium, 1-(1-Hexadecyl)-3-octylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium, 1-(1-Octyl)-2,3-dimethylimidazolium, 1,4-Dimethylimidazolium, 1,3,4-Trimethylimidazolium, 1,4-Dimethyl-3-ethylimidazolium, 3-butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 1-(Prop-1-en-3-yl)-3-methylimidazolium.

Ganz besonders bevorzugt setzt man als Pyrazoliumionen (IVf), (IVg) beziehungsweise (IVg') solche ein, bei denen

- $R^1$ Wasserstoff, Methyl oder Ethyl ist und $R^2$ bis $R^4$ unabhängig voneinander Wasserstoff oder Methyl sind.

Ganz besonders bevorzugt setzt man als Pyrazoliumionen (IVh) solche ein, bei denen

- $R^1$ bis $R^4$ unabhängig voneinander Wasserstoff oder Methyl sind.

Ganz besonders bevorzugt setzt man als 1-Pyrazoliniumionen (IVi) solche ein, bei denen

- unabhängig voneinander $R^1$ bis $R^6$ Wasserstoff oder Methyl sind.

Ganz besonders bevorzugt setzt man als 2-Pyrazoliniumionen (IVj) beziehungsweise (IVj') solche ein, bei denen

- $R^1$ Wasserstoff, Methyl, Ethyl oder Phenyl ist und $R^2$ bis $R^6$ unabhängig voneinander Wasserstoff oder Methyl sind.

Ganz besonders bevorzugt setzt man als 3-Pyrazoliniumionen (IVk) beziehungsweise (IVk') solche ein, bei denen

- $R^1$ und $R^2$ unabhängig voneinander Wasserstoff, Methyl, Ethyl oder Phenyl sind und $R^3$ bis $R^6$ unabhängig voneinander Wasserstoff oder Methyl sind.

Ganz besonders bevorzugt setzt man als Imidazoliniumionen (IVl) solche ein, bei denen

- $R^1$ und $R^2$ unabhängig voneinander Wasserstoff, Methyl, Ethyl, 1-Butyl oder Phenyl sind, $R^3$ und $R^4$ unabhängig voneinander Wasserstoff, Methyl oder Ethyl sind und $R^5$ und $R^6$ unabhängig voneinander Wasserstoff oder Methyl sind.

Ganz besonders bevorzugt setzt man als Imidazoliniumionen (IVm) beziehungsweise (IVm') solche ein, bei denen

- $R^1$ und $R^2$ unabhängig voneinander Wasserstoff, Methyl oder Ethyl sind und $R^3$ bis $R^6$ unabhängig voneinander Wasserstoff oder Methyl sind.

Ganz besonders bevorzugt setzt man als Imidazoliniumionen (IVn) beziehungsweise (IVn') solche ein, bei denen

- $R^1$ bis $R^3$ unabhängig voneinander Wasserstoff, Methyl oder Ethyl sind und $R^4$ bis $R^6$ unabhängig voneinander Wasserstoff oder Methyl sind.

Ganz besonders bevorzugt setzt man als Thiazoliumionen (IVo) beziehungsweise (IVo') sowie als Oxazoliumionen (IVp) solche ein, bei denen

- $R^1$ Wasserstoff, Methyl, Ethyl oder Phenyl ist und $R^2$ und $R^3$ unabhängig voneinander Wasserstoff oder Methyl sind.

Ganz besonders bevorzugt setzt man als 1,2,4-Triazoliumionen (IVq), (IVq') beziehungsweise (IVq") solche ein, bei denen

- $R^1$ und $R^2$ unabhängig voneinander Wasserstoff, Methyl, Ethyl oder Phenyl sind und $R^3$ Wasserstoff, Methyl oder Phenyl ist.

Ganz besonders bevorzugt setzt man als 1,2,3-Triazoliumionen (IVr), (IVr') beziehungsweise (IVr") solche ein, bei denen

- $R^1$ Wasserstoff, Methyl oder Ethyl ist und $R^2$ und $R^3$ unabhängig voneinander Wasserstoff oder Methyl sind, oder $R^2$ und $R^3$ zusammen 1,4-Buta-1,3-dienylen ist.

Ganz besonders bevorzugt setzt man als Pyrrolidiniumionen (IVs) solche ein, bei denen

- $R^1$ Wasserstoff, Methyl, Ethyl oder Phenyl ist und $R^2$ bis $R^9$ unabhängig voneinander Wasserstoff oder Methyl sind.

Ganz besonders bevorzugt setzt man als Imidazolidiniumionen (IVt) solche ein, bei denen

- $R^1$ und $R^4$ unabhängig voneinander Wasserstoff, Methyl, Ethyl oder Phenyl sind und $R^2$ und $R^3$ sowie $R^5$ bis $R^8$ unabhängig voneinander Wasserstoff oder Methyl sind.

Ganz besonders bevorzugt setzt man als Ammoniumionen (IVu) solche ein, bei denen

- $R^1$ bis $R^3$ unabhängig voneinander $C_{1-}$ bis $C_{18}$-Alkyl sind; oder

- $R^1$ und $R^2$ zusammen 1,5-Pentylen oder 3-Oxa-1,5-pentylen sind und $R^3$ $C_1$-$C_{18}$-Alkyl oder 2-Cyanoethyl ist.

Als ganz besonders bevorzugte Ammoniumionen (IVu) seien genannt Methyl-tri-(1-butyl)-ammonium, N,N-Dimethylpiperidinium und N,N-Dimethylmorpholinium.

Beispiele für die tertiären Amine, von denen sich die quatären Ammoniumionen der allgemeinen Formel (IVu) durch Quaternisierung mit den genannten Resten R ableiten, sind Diethyl-n-butylamin, Diethyl-tert-butylamin, Diethyl-n-pentylamin, Diethyl-hexylamin, Diethyloctylamin, Diethyl-(2-ethylhexyl)-amin, Di-n-propylbutylamin, Di-n-propyl-n-pentylamin, Di-n-propylhexylamin, Di-n-propyloctylamin, Di-n-propyl-(2-ethylhexyl)-amin, Di-isopropylethylamin, Di-iso-propyl-n-propylamin, Di-isopropyl-butylamin, Diisopropylpentylamin, Di-iso-propylhexylamin, Di-isopropyloctylamin, Di-iso-propyl-(2-ethylhexyl)-amin, Di-n-butylethylamin, Di-n-butyl-n-propylamin, Di-n-butyl-n-pentylamin, Di-n-butylhexylamin, Di-n-butyloctylamin, Di-n-butyl-(2-ethylhexyl)-amin, N-n-Butylpyrrolidin, N-sek-Butylpyrrodidin, N-tert-Butylpyrrolidin, N-n-Pentylpyrrolidin, N,N-Dimethylcyclohexylamin, N,N-Diethylcyclohexylamin, N,N-Di-n-butylcyclohexylamin, N-n-Propylpiperidin, N-iso-Propylpiperidin, N-n-Butyl-piperidin, N-sek-Butylpiperidin, N-tert-Butylpiperidin, N-n-Pentylpiperidin, N-n-Butylmorpholin, N-sek-Butylmorpholin, N-tert-Butylmorpholin, N-n-Pentylmorpholin, N-Benzyl-N-ethylanilin, N-Benzyl-N-n-propylanilin, N-Benzyl-N-iso-propylanilin, N-Benzyl-N-n-butylanilin, N,N-Dimethyl-p-toluidin, N,N-Diethyl-p-toluidin, N,N-Di-n-butyl-p-toluidin, Diethylbenzylamin, Di-n-propylbenzylamin, Di-n-butylbenzylamin, Diethylphenylamin, Di-n-Propylphenylamin und Di-n-Butylphenylamin.

Bevorzugte quatäre Ammoniumsalze der allgemeinen Formel (IVu) sind solche, die sich von folgenden tertiären Aminen durch Quarternisierung mit den genannten Resten R ableiten lassen, wie Di-iso-propylethylamin, Diethyl-tert-butylamin, Di-iso-propylbutylamin, Di-n-butyl-n-pentylamin, N,N-Di-n-butylcyclohexylamin sowie tertiäre Amine aus Pentylisomeren.

Besonders bevorzugte tertiäre Amine sind Di-n-butyl-n-pentylamin und tertiäre Amine aus Pentylisomeren. Ein weiteres bevorzugtes tertiäres Amin, das drei identische Reste aufweist, ist Triallylamin.

Ganz besonders bevorzugt setzt man als Guanidiniumionen (IVv) solche ein, bei denen - $R^1$ bis $R^5$ Methyl sind.

Als ganz besonders bevorzugtes Guanidiniumion (IVv) sei genannt N,N,N',N',N",N"-Hexamethylguanidinium.

Ganz besonders bevorzugt setzt man als Choliniumionen (IVw) solche ein, bei denen

- $R^1$ und $R^2$ unabhängig voneinander Methyl, Ethyl, 1-Butyl oder 1-Octyl sind und $R^3$ Methyl oder Ethyl ist;

- $R^1$ Methyl, Ethyl, 1-Butyl oder 1-Octyl ist, $R^2$ eine $-CH_2$-$CH_2$-$OR^4$-Gruppe ist und $R^3$ und $R^4$ unabhängig voneinander Methyl oder Ethyl sind; oder

- $R^1$ eine $-CH_2$-$CH_2$-$OR^4$-Gruppe ist, $R^2$ eine $-CH_2$-$CH_2$-$OR^5$-Gruppe ist und $R^3$ bis $R^5$ unabhängig voneinander Methyl oder Ethyl sind.

Besonders bevorzugte Choliniumionen (IVw) sind solche, bei denen $R^3$ ausgewählt ist aus Methyl, Ethyl, 5-Methoxy-3-oxa-pentyl, 8-Methoxy-3,6-dioxa-octyl, 11-Methoxy-3,6,9-trioxa-undecyl, 7-Methoxy-4-oxa-heptyl, 11-Methoxy-4,8-dioxa-undecyl, 15-Methoxy-4,8,12-trioxa-pentadecyl, 9-Methoxy-5-oxa-nonyl, 14-Methoxy-5,10-oxa-tetradecyl, 5-Ethoxy-3-oxa-pentyl, 8-Ethoxy-3,6-dioxa-octyl, 11-Ethoxy-3,6,9-trioxa-undecyl, 7-Ethoxy-4-oxa-heptyl, 11-Ethoxy-4,8-dioxa-undecyl, 15-Ethoxy-4,8,12-trioxa-pentadecyl, 9-Ethoxy-5-oxa-nonyl oder 14-Ethoxy-5,10-oxa-tetradecyl.

Ganz besonders bevorzugt setzt man als Phosphoniumionen (IVx) solche ein, bei denen

- $R^1$ bis $R^3$ unabhängig voneinander $C_1$-$C_{18}$-Alkyl, insbesondere Butyl, Isobutyl, 1-Hexyl oder 1-Octyl sind.

Unter den vorstehend genannten heterocyclischen Kationen sind die Pyridiniumionen, Pyrazolinium-, Pyrazoliumionen und die Imidazolinium- sowie die Imidazoliumionen bevorzugt. Weiterhin sind Ammoniumionen bevorzugt.

Insbesondere bevorzugt sind 1-Methylpyridinium, 1-Ethylpyridinium, 1-(1-Butyl)pyridinium, 1-(1-Hexyl)pyridinium, 1-(1-Octyl)pyridinium, 1-(1-Hexyl)-pyridinium, 1-(1-Octyl)-pyridinium, 1-(1-Dodecyl)-pyridinium, 1-(1-Tetradecyl)-pyridinium, 1-(1-Hexadecyl)-pyridinium, 1,2-Dimethylpyridinium, 1-Ethyl-2-methylpyridinium, 1-(1-Butyl)-2-methylpyridinium, 1-(1-Hexyl)-2-methylpyridinium, 1-(1-Octyl)-2-methylpyridinium, 1-(1-Dodecyl)-2-methylpyridinium, 1-(1-Tetradecyl)-2-methylpyridinium, 1-(1-Hexadecyl)-2-methylpyridinium, 1-Methyl-2-ethylpyridinium, 1,2-Diethylpyridinium,

1-(1-Butyl)-2-ethyl-pyridinium, 1-(1-Hexyl)-2-ethylpyridinium, 1-(1-Octyl)-2-ethylpyridinium, 1-(1-Dodecyl)-2-ethylpyridinium, 1-(1-Tetradecyl)-2-ethylpyridinium, 1-(1-Hexadecyl)-2-ethylpyridinium, 1,2-Dimethyl-5-ethyl-pyridinium, 1,5-Diethyl-2-methyl-pyridinium, 1-(1-Butyl)-2-methyl-3-ethyl-pyridinium, 1-(1-Hexyl)-2-methyl-3-ethyl-pyridinium, 1-(1-Octyl)-2-methyl-3-ethyl-pyridinium, 1-(1-Dodecyl)-2-methyl-3-ethyl-pyridinium, 1-(1-Tetradecyl)-2-methyl-3-ethyl-pyridinium, 1-(1-Hexadecyl)-2-methyl-3-ethyl-pyridinium, 1-Methylimidazolium, 1-Ethylimidazolium, 1-(1-Butyl)-imidazolium, 1-(1-Octyl)-imidazolium, 1-(1-Dodecyl)-imidazolium, 1-(1-Tetradecyl)-imidazolium, 1-(1-Hexadecyl)-imidazolium, 1,3-Dimethylimidazolium, 1-Ethyl-3-methylimidazolium, 1-(1-Butyl)-3-methylimidazolium, 1-(1-Hexyl)-3-methyl-imidazolium, 1-(1-Octyl)-3-methylimidazolium, 1-(1-Dodecyl)-3-methylimidazolium, 1-(1-Tetradecyl)-3-methylimidazolium, 1-(1-Hexadecyl)-3-methylimidazolium, 1,2-Dimethylimidazolium, 1,2,3-Trimethylimidazolium, 1-Ethyl-2,3-dimethylimidazolium, 1-(1-Butyl)-2,3-dimethylimidazolium, 1-(1-Hexyl)-2,3-dimethyl-imidazolium und 1-(1-Octyl)-2,3-dimethylimidazolium, 1,4-Dimethylimidazolium, 1,3,4-Trimethylimidazolium, 1,4-Dimethyl-3-ethylimidazolium, 3-Butylimidazolium, 1,4-Dimethyl-3-octylimidazolium, 1,4,5-Trimethylimidazolium, 1,3,4,5-Tetramethylimidazolium, 1,4,5-Trimethyl-3-ethylimidazolium, 1,4,5-Trimethyl-3-butylimidazolium, 1,4,5-Trimethyl-3-octylimidazolium und 1-(Prop-1-en-3-yl)-3-metyl-imidazolium.

Als Anionen sind prinzipiell alle Anionen einsetzbar.

Das Anion $[Y]^{n-}$ der ionischen Flüssigkeit ist beispielsweise ausgewählt aus

- der Gruppe der Halogenide und halogenhaltigen Verbindungen der Formel:

  F-, $Cl^-$, Br, $I^-$, $BF_4^-$, $PF_6^-$, $AlCl_4^-$, $Al_2Cl_7^-$, $AbCl_{10}^-$, $AlBr_4^-$, $FeCl_4^-$, $BCl_4^-$, $SbF_6^-$, $AsF_6$,$^-ZnCl_3^-$, $SnCl_3^-$, $CuCl_2^-$, $CF_3SO_3^-$, $CF_3CO_2^-$, $CCl_3CO_2^-$, $CN^-$, $SCN^-$, $OCN^-$

- der Gruppe der Sulfate, Sulfite und Sulfonate der allgemeinen Formel:

  $SO_4^{2-}$, $HSO_4^-$, $SO_3^{2-}$, $HSO_3^-$, $R^aOSO_3^-$, $R^aSO_3^-$

- der Gruppe der Phosphate der allgemeinen Formel
  $PO_4^{3-}$, $HPO_4^{2-}$, $H_2PO_4^-$, $R^aPO_4^{2-}$, $HR^aPO_4^-$, $R^aR^bPO_4^-$

- der Gruppe der Phosphonate und Phosphinate der allgemeinen Formel:

  $R^aHPO_3^-$, $R^aR^bPO_2^-$, $R^aR^bPO_3^-$

- der Gruppe der Phosphite der allgemeinen Formel:

  $PO_3^{3-}$, $HPO_3^{2-}$, $H_2PO_3^-$, $R^aPO_3^{2-}$, $R^aHPO_3^-$, $R^aR^bPO_3^-$

- der Gruppe der Phosphonite und Phosphinite der allgemeinen Formel:

  $R^aR^bPO_2^-$, $R^aHPO_2^-$, $R^aR^bPO^-$, $R^aHPO^-$

- der Gruppe der Carbonsäuren der allgemeinen Formel:

  $R^aCOO^-$

- der Gruppe der Borate der allgemeinen Formel:

  $BO_3^{3-}$, $HBO_3^{2-}$, $H_2BO_3^-$, $R^aR^bBO_3^-$, $R^aHBO_3^-$, $R^aBO_3^{2-}$, $B(OR^a)(OR^b)(OR^c)(OR^d)^-$, $B(HSO_4)^-$, $B(R^aSO_4)^-$

- der Gruppe der Boronate der allgemeinen Formel:

  $R^aBO_2^{2-}$, $R^aR^bBO^-$

- der Gruppe der Carbonate und Kohlensäureester der allgemeinen Formel:

  $HCO_3^-$, $CO_3^{2-}$, $R^aCO_3^-$

- der Gruppe der Silikate und Kieselsäuresäureester der allgemeinen Formel:

$SiO_4^{4-}$, $HSiO_4^{3-}$, $H_2SiO_4^{2-}$, $H_3SiO_4^-$, $R^aSiO_4^{3-}$, $R^aR^bSiO_4^{2-}$, $R^aR^bR^cSiO_4^-$, $HR^aSiO_4^{2-}$, $H_2R^aSiO_4^-$, $HR^aR^bSiO_4^-$

- der Gruppe der Halometallate der allgemeinen Formel $[M_qHal_r]^{s-}$, wobei M für ein Metall und Hal für Fluor, Chlor, Brom oder Iod steht, q und r ganze positive Zahlen sind und die Stöchiometrie des Komplexes angeben und s eine ganze positive Zahl ist und die Ladung des Komplexes angibt;

Darin bedeuten $R^a$, $R^b$, $R^c$ und $R^d$ unabhängig voneinander jeweils Wasserstoff, $C_1$-$C_{30}$-Alkyl, gegebenenfalls durch ein oder mehrere nicht-benachbarte Sauerstoff- und/oder Schwefelatome und/oder ein oder mehrere substituierte Iminogruppen unterbrochenes $C_2$-$C_{18}$-Alkyl, $C_6$-$C_{14}$-Aryl, $C_5$-$C_{12}$-Cycloalkyl oder einen fünf- bis sechsgliedrigen Sauerstoff-, Stickstoff- und/oder Schwefelatome aufweisenden Heterocyclus, wobei zwei von ihnen gemeinsam einen ungesättigten, gesättigten oder aromatischen, gegebenenfalls durch ein oder mehrere Sauerstoff- und/oder Schwefelatome und/oder ein oder mehrere unsubstituierte oder substituierte Iminogruppen unterbrochenen Ring bilden können, wobei die genannten Reste jeweils zusätzlich durch geeignete funktionelle Gruppen, Aryl, Alkyl, Aryloxy, Alkyloxy, Halogen, Heteroatome und/oder Heterocyclen substituiert sein können.

Darin sind gegebenenfalls durch geeignete funktionelle Gruppen, Aryl, Alkyl, Aryloxy, Alkyloxy, Halogen, Heteroatome und/oder Heterocyclen substituiertes $C_1$-$C_{18}$-Alkyl beispielsweise Methyl, Ethyl, Propyl, Isopropyl, n-Butyl, sec-Butyl, tert.-Butyl, Pentyl, Hexyl, Heptyl, Octyl, 2-Ethylhexyl, 2,4,4-Trimethylpentyl, Decyl, Dodecyl, Tetradecyl, Hexadecyl, Octadecyl, 1,1-Dimethylpropyl, 1,1-Dimethylbutyl, 1,1,3,3-Tetramethylbutyl, Benzyl, 1-Phenylethyl, $\alpha,\alpha$-Dimethylbenzyl, Benzhydryl, p-Tolylmethyl, 1-(p-Butylphenyl)-ethyl, p-Chlorbenzyl, 2,4-Dichlorbenzyl, p-Methoxybenzyl, m-Ethoxybenzyl, 2-Cyanoethyl, 2-Cyanopropyl, 2-Methoxycarbonylethyl, 2-Ethoxycarbonylethyl, 2-Butoxycarbonylpropyl, 1,2-Di-(methoxycarbonyl)-ethyl, 2-Methoxyethyl, 2-Ethoxyethyl, 2-Butoxyethyl, Diethoxymethyl, Diethoxyethyl, 1,3-Dioxolan-2-yl, 1,3-Dioxan-2-yl, 2-Methyl-1,3-dioxolan-2-yl, 4-Methyl-1,3-dioxolan-2-yl, 2-Isopropoxyethyl, 2-Butoxypropyl, 2-Octyloxyethyl, Chlormethyl, Trichlormethyl, Trifluormethyl, 1,1-Dimethyl-2-chlorethyl, 2-Methoxyisopropyl, 2-Ethoxyethyl, Butylthiomethyl, 2-Dodecylthioethyl, 2-Phenlythioethyl, 2,2,2-Trifluorethyl, 2-Dimethylaminoethyl, 2-Dimethylaminopropyl, 3-Dimethylaminopropyl, 4-Dimethylaminobutyl, 6-Dimethylaminohexyl, 2-Phenoxyethyl, 2-Phenoxypropyl, 3-Phenoxypropyl, 4-Phenoxybutyl, 6-Phenoxyhexyl, 2-Methoxyethyl, 2-Methoxypropyl, 3-Methoxypropyl, 4-Methoxybutyl, 6-Methoxyhexyl, 2-Ethoxyethyl, 2-Ethoxypropyl, 3-Ethoxypropyl, 4-Ethoxybutyl oder 6-Ethoxyhexyl.

Gegebenenfalls durch ein oder mehrere nicht-benachbarte Sauerstoff- und/oder Schwefelatome und/oder ein oder mehrere substituierte oder unsubstituierte Iminogruppen unterbrochenes $C_2$-$C_{18}$-Alkyl sind beispielsweise 5-Methoxy-3-oxapentyl, 8-Methoxy-3,6-dioxa-octyl, 11-Methoxy-3,6,9-trioxaundecyl, 7-Methoxy-4-oxaheptyl, 11-Methoxy-4,8-dioxa-undecyl, 15-Methoxy-4,8,12-trioxapentadecyl, 9-Methoxy-5-oxanonyl, 14-Methoxy-5,10-oxatetradecyl, 5-Ethoxy-3-oxapentyl, 8-Ethoxy-3,6-dioxaoctyl, 11-Ethoxy-3,6,9-trioxaundecyl, 7-Ethoxy-4-oxaheptyl, 11-Ethoxy-4,8-dioxaundecyl, 15-Ethoxy-4,8,12-trioxapentadecyl, 9-Ethoxy-5-oxanonyl oder 14-Ethoxy-5,10-oxatetra-decyl.

Bilden zwei Reste einen Ring, so können diese Reste gemeinsam beispielsweise als anellierter Baustein 1,3-Propylen, 1,4-Butylen, 2-Oxa-1,3-propylen, 1-Oxa-1,3-propylen, 2-Oxa-1,3-propenylen, 1-Aza-1,3-propenylen, 1-$C_1$-$C_4$-Alkyl-1-aza-1,3-propenylen, 1,4-Buta-1,3-dienylen, 1-Aza-1,4-buta-1,3-dienylen oder 2-Aza-1,4-buta-1,3-dienylen bedeuten.

Die Anzahl der nicht-benachbarten Sauerstoff- und/oder Schwefelatome und/oder Iminogruppen ist grundsätzlich nicht beschränkt bzw. beschränkt sich automatisch durch die Größe des Rests oder des Ringbausteins. In der Regel beträgt sie nicht mehr als 5 in dem jeweiligen Rest, bevorzugt nicht mehr als 4 oder ganz besonders bevorzugt nicht mehr als 3. Weiterhin befinden sich zwischen zwei Heteroatomen in der Regel mindestens ein, bevorzugt mindestens zwei Kohlenstoffatom(e).

Substituierte und unsubstituierte Iminogruppen können beispielsweise Imino-, Methylimino-, iso-Propylimino, n-Butylimino oder tert-Butylimino sein.

Unter dem Begriff "funktionelle Gruppen" sind beispielsweise die folgenden zu verstehen: Di-($C_1$-$C_4$-Alkyl)-amino, $C_1$-$C_4$-Alkyloxycarbonyl, Cyano oder $C_1$-$C_4$-Alkoxy. Dabei ist $C_1$ bis $C_4$-Alkyl Methyl, Ethyl, Propyl, Isopropyl, n-Butyl, sec-Butyl oder tert.-Butyl.

Gegebenenfalls durch geeignete funktionelle Gruppen, Aryl, Alkyl, Aryloxy, Alkyloxy, Halogen, Heteroatome und/oder Heterocyclen substituiertes $C_6$-$C_{14}$-Aryl sind beispielsweise Phenyl, Tolyl, Xylyl, $\alpha$-Naphthyl, $\beta$-Naphthyl, 4-Diphenylyl, Chlorphenyl, Dichlorphenyl, Trichlorphenyl, Difluorphenyl, Methylphenyl, Dimethylphenyl, Trimethylphenyl, Ethylphenyl, Diethylphenyl, iso-Propylphenyl, tert.-Butylphenyl, Dodecylphenyl, Methoxyphenyl, Dimethoxyphenyl, Ethoxyphenyl, Hexyloxyphenyl, Methylnaphthyl, Isopropylnaphthyl, Chlornaphthyl, Ethoxynaphthyl, 2,6-Dimethylphenyl, 2,4,6-Trimethylphenyl, 2,6-Dimethoxyphenyl, 2,6-Dichlorphenyl, 4-Bromphenyl, 2- oder 4-Nitrophenyl, 2,4- oder 2,6-Dinitrophenyl, 4-Dimethylaminophenyl, 4-Acetylphenyl, Methoxyethylphenyl oder Ethoxymethylphenyl.

Gegebenenfalls durch geeignete funktionelle Gruppen, Aryl, Alkyl, Aryloxy, Halogen, Heteroatome und/oder Heterocyclen substituiertes $C_5$-$C_{12}$-Cycloalkyl sind beispielsweise Cyclopentyl, Cyclohexyl, Cyclooctyl, Cyclododecyl, Methylcyclopentyl, Dimethylcyclopentyl, Methylcyclohexyl, Dimethylcyclohexyl, Diethylcyclohexyl, Butylcyclohexyl, Methoxycyclohexyl, Dimethoxycyclohexyl, Diethoxycyclohexyl, Butylthiocyclohexyl, Chlorcyclohexyl, Dichlorcyclohexyl, Dichlorcyclopentyl sowie ein gesättigtes oder ungesättigtes bicyclisches System wie Norbornyl oder Norbornenyl.

Ein fünf- bis sechsgliedriger Sauerstoff-, Stickstoff- und/oder Schwefelatome aufweisender Heterocyclus ist beispielsweise Furyl, Thiophenyl, Pyryl, Pyridyl, Indolyl, Benzoxazolyl, Dioxolyl, Dioxyl, Benzimidazolyl, Benzthiazolyl, Dimethylpyridyl, Methylchinolyl, Dimethylpyryl, Methoxyfuryl, Dimethoxypyridyl, Diflourpyridyl, Methylthiophenyl, Isopropylthiophenyl oder tert.-Butylthiophenyl.

Bevorzugt setzt man als ionische Flüssigkeiten 1-Ethyl-3-methylimidazolium chlorid, 1-Ethyl-3-methylimidazolium methansulfonat, 1-Butyl-3-methylimidazolium chlorid, 1-Butyl-3-methylimidazolium methansulfonat, Methyl-tri-n-butylammonium methylsulfat, 1,2,4-Trimethylpyrazolium methylsulfat, 1-Ethyl-2,3-di-methylimidazolium ethylsulfat, 1,2,3-Trimethyl-imidazolium methylsulfat, Methylimidazolium chloride, Methylimidazolium hydrogensulfat, 1-Ethyl-3-methylimidazolium hydrogensulfat, 1-Ethyl-3-methylimidazolium tetrachloroaluminat, 1-Butyl-3-methylimidazolium hydrogensulfat, 1-Butyl-3-methylimidazolium tetrachloroaluminat, 1-Ethyl-3-methylimidazolium acetate, 1-Butyl-3-methylimidazolium acetate, 1-Ethyl-3- methylimidazolium ethylsulfat, 1-Butyl-3-methylimidazolium methylsulfat, 1-Ethyl-3-methylimidazolium thiocyanat, 1-Butyl-3-methylimidazolium thiocyanat, Choline acetate, Choline salicylat, Tris-(2-hydroxyethyl)-methylammonium methylsulfat und/oder 1-Ethyl-3-methylimidazolium diethylphosphat ein.

Insbesondere bevorzugt sind 1-Ethyl-3-methylimidazolium methansulfonat, 1-Ethyl-2,3-di-methylimidazolium ethylsulfat, 1-Ethyl-3-methylimidazolium diethylphosphat und/oder 1-Ethyl-3-methylimidazolium chlorid.

Unter dem Ausdruck "textiles Substrat" werden in dieser Schrift alle bekannten flächigen Strukturen verstanden, für die bekannt ist, dass man sie mittels Koagulation mit Polyurethan beschichten kann. Als textile Substrate werden bevorzugt solche auf der Basis von natürlichen Fasern, z. B. Cellulose, beispielsweise Baumwolle, und/oder synthetischen Fasern, z. B. Polyamid, Polyester, thermoplastischem Polyurethan, Spandex eingesetzt. Dabei können die Substrate bevorzugt in der Form von Geweben, Gewirken oder Vliesstoffen vorliegen. Besonders bevorzugt werden als textiles Substrat zur Beschichtung mit der Lösung (I) Vliesstoffe eingesetzt.

Nach dem Beschichten, bei dem das textile Substrat auch durchtränkt werden kann, wird das beschichtete Substrat üblicherweise durch ein Koagulationsbad geleitet, in dem das Polyurethan ausgefällt, d. h. koaguliert wird. Das Ausfällen erfolgt wie beschrieben bevorzugt in Wasser, d. h. dass man bevorzugt das Polyurethan, bevorzugt thermoplastisches Polyurethan in einem Bad enthaltend Wasser koaguliert, d. h. ausfällt. Als Koagulant wird bevorzugt eine Mischung (II) verwendet. Die Mischung (II) enthält Wasser sowie gegebenenfalls ionische Flüssigkeit. Das Gewichtsverhältnis von Wasser zu ionischer Flüssigkeit in der Mischung (II) kann in einem breiten Bereich gewählt werden. Bestimmt wird das Verhältnis durch die Koagulationseigenschaften von Wasser in der Mischung und von der Trennmöglichkeit von der ionischen Flüssigkeit nach Verlassen des Koagulationsbades. Die maximale Konzentration von ionischer Flüssigkeit in Wasser in der Mischung (II) richtet sich hierbei bevorzugt nach den Koagulationseigenschaften von Wasser in der ionischen Flüssigkeit. Die minimale Konzentration von ionischer Flüssigkeit in Wasser richtet sich bevorzugt nach den Trennmöglichkeiten von Wasser und ionischer Flüssigkeit.

Nach der Koagulation enthalten das beschichtete Textil zumeist noch einen Restgehalt von ionischen Flüssigkeiten. Bevorzugt sind somit auch beschichtete Textilien, insbesondere Kunstleder enthaltend ionische Flüssigkeit, wobei der Gehalt an ionischer Flüssigkeit in dem Polyurethan bevorzugt kleiner 10 Gew.-% beträgt, bezogen auf das Gesamtgewicht des Polyurethans enthaltend die ionische Flüssigkeit.

Die erfindungsgemäßen beschichteten Textilien können insbesondere für Produkte eingesetzt werden, die in W. Schröer, Textilveredlung 1987, 22 (12), Seite 467, Kapitel 6 beschrieben sind.

## Patentansprüche

1. Verfahren zur Herstellung von beschichteten Textilien, wobei man ein textiles Substrat mit einer Lösung (I) enthaltend Polyurethan beschichtet oder tränkt und anschließend das Polyurethan in oder auf dem textilen Substrat ausfällt, **dadurch gekennzeichnet, dass** man als Lösung (I) Polyurethan gelöst in ionischer Flüssigkeit einsetzt, wobei die ionische Flüssigkeit aus der folgenden Gruppe ausgewählt ist:

   (A) Salze der allgemeinen Formel (I)

   $$[A]_n^+ \; [Y]^{n-} \qquad (I),$$

   in der n für 1, 2, 3 oder 4 steht, $[A]^+$ für ein quartäres Ammonium-Kation, ein Oxonium-Kation, ein Sulfonium-Kation oder ein Phosphonium-Kation und $[Y]^{n-}$ für ein ein-, zwei-, drei- oder vierwertiges Anion steht; oder
   (B) gemischte Salze der allgemeinen Formeln (II)

$[A^1]^+[A^2]^+ [Y]^{n-}$ (IIa),

wobei n = 2;

$[A^1]^+[A^2]^+[A^3]^+ [Y]^{n-}$ (IIb),

wobei n = 3; oder

$[A^1]^+[A^2]^+[A^3]^+[A^4]^+ [Y]^{n-}$ (IIc),

wobei n = 4 und
wobei $[A^1]^+$, $[A^2]^+$, $[A^3]^+$ und $[A^4]^+$ unabhängig voneinander aus den für $[A]^+$ genannten Gruppen ausgewählt sind und $[Y]^{n-}$ die unter (A) genannte Bedeutung besitzt; oder
(C) gemischte Salze der allgemeinen Formeln (III)

$[A^1]^+[A^2]^+[A^3]^+[M^1]^+ [Y]^{n-}$ (IIIa),

wobei n = 4;

$[A^1]^+[A^2]^+[M^1]^+[M^2]^+ [Y]^{n-}$ (IIIb),

wobei n = 4;

$[A^1]^+[M^1]^+[M^2]^+[M^3]^+ [Y]^{n-}$ (IIIc),

wobei n = 4;

$[A^1]^+[A^2]^+[M^1]^+ [Y]^{n-}$ (IIId),

wobei n = 3;

$[A^1]^+[M^1]^+[M^2]^+ [Y]^{n-}$ (IIIe),

wobei n = 3;

$[A^1]^+[M^1]^+ [Y]^{n-}$ (IIIf),

wobei n = 2;

$[A^1]^+[A^2]^+[M^4]^{2+} [Y]^{n-}$ (IIIg),

wobei n = 4;

$[A^1]^+[M^1]^+[M^4]^{2+} [Y]^{n-}$ (IIIh),

wobei n = 4;

$[A^1]^+[M^5]^{3+} [Y]^{n-}$ (IIIi),

wobei n = 4; oder

$[A^1]^+[M^4]^{2+} [Y]^{n-}$ (IIIj),

wobei n = 3 und
wobei $[A^1]^+$, $[A^2]^+$ und $[A^3]^+$ unabhängig voneinander aus den für $[A]^+$ genannten Gruppen ausgewählt sind, $[Y]^{n-}$ die unter (A) genannte Bedeutung besitzt und $[M^1]^+$, $[M^2]^+$, $[M^3]^+$ einwertige Metallkationen, $[M^4]^{2+}$ zweiwertige Metallkationen und $[M^5]^{3+}$ dreiwertige Metallkationen bedeuten.

2. Verfahren nach Anspruch 1, **dadurch gekennzeichnet, dass** man die Lösung (I) erzeugt, indem man das Polyurethan in der ionischen Flüssigkeit herstellt.

3. Verfahren nach Anspruch 1, **dadurch gekennzeichnet, dass** man die Lösung (I) dadurch erzeugt, indem man Polyurethan in ionischen Flüssigkeiten auflöst.

4. Verfahren nach Anspruch 1, **dadurch gekennzeichnet, dass** die Lösung (I) thermoplastisches Polyurethan enthält.

5. Verfahren nach einem der Ansprüche 1 bis 4, **dadurch gekennzeichnet, dass** das Polyurethan, bevorzugt thermoplastische Polyurethan basiert auf der Umsetzung von (a) Isocyanat mit (b) gegenüber Isocyanaten reaktiven Verbindungen mit einem Molekulargewicht zwischen 500 g/mol und 10000 g/mol sowie (c) Kettenverlängerungsmitteln gegebenenfalls in Gegenwart von (d) Katalysatoren und/oder (e) Hilfsstoffen.

6. Verfahren nach Anspruch 1, **dadurch gekennzeichnet, dass** man als ionische Flüssigkeiten 1-Ethyl-3-methylimidazolium methansulfonat, 1-Ethyl-2,3-dimethylimidazalium ethylsulfat, 1-Ethyl-3-methylimidazolium diethylphosphat und/oder 1-Ethyl-3-methylimidazolium chlorid einsetzt.

7. Verfahren nach Anspruch 1, **dadurch gekennzeichnet, dass** man als textiles Substrat ein Gewebe, Gewirke oder Vlies auf der Basis von natürlichen oder synthetischen Fasern einsetzt.

8. Verfahren nach Anspruch 1, **dadurch gekennzeichnet, dass** man als textiles Substrat ein Vliesstoff einsetzt.

9. Verfahren nach Anspruch 1, **dadurch gekennzeichnet, dass** man das Polyurethan in einem Bad enthaltend Wasser ausfällt.

10. Beschichtetes Textil erhältlich nach einem der Ansprüche 1 bis 9, **dadurch gekennzeichnet, dass** das beschichtete Textil ionische Flüssigkeit enthält.

11. Beschichtetes Textil nach Anspruch 10, **dadurch gekennzeichnet, dass** das beschichtete Textil Kunstleder ist.

## Claims

1. A process for the production of coated textiles, a textile substrate being coated or impregnated with a solution (I) comprising polyurethane, and the polyurethane then being precipitated in or on the textile substrate, wherein polyurethane dissolved in ionic liquid is used as solution (I), wherein the ionic liquid is selected from the following group:

(A) salts of the general formula (I)

$$[A]_n^+ \quad [Y]^{n-} \qquad (I),$$

where n is 1, 2, 3 or 4, $[A]^+$ is a quaternary ammonium cation, an oxonium cation, a sulfonium cation or a phosphonium cation and $[Y]^{n-}$ is a monovalent, divalent, trivalent or tetravalent anion; or
(B) mixed salts of the general formulae (II)

$$[A^1]^+[A^2]^+ [Y]^{n-} \qquad (IIa),$$

where n = 2;

$$[A^1]^+[A^2]^+[A^3]^+ [Y]^{n-} \qquad (IIb),$$

where n = 3; or

$$[A^1]^+[A^2]^+[A^3]^+[A^4]^+ [Y]^{n-} \qquad (IIc),$$

where n = 4 and

where $[A^1]^+$, $[A^2]^+$, $[A^3]^+$ and $[A^4]^+$, independently of one another, are selected from the groups mentioned for $[A]^+$ and $[Y]^{n-}$ has the meaning stated under (A); or
(C) mixed salts of the general formulae (III)

$$[A^1]^+[A^2]^+[A^3]^+[M^1]^+ [Y]^{n-} \quad (IIIa),$$

where n = 4;

$$[A^1]^+[A^2]^+[M^1]^+[M^2]^+ [Y]^{n-} \quad (IIIb),$$

where n = 4;

$$[A^1]^+[M^1]^+[M^2]^+[M^3]^+ [Y]^{n-} \quad (IIIc),$$

where n = 4;

$$[A^1]^+[A^2]^+[M^1]^+ [Y]^{n-} \quad (IIId),$$

where n = 3;

$$[A^1]^+[M^1]^+[M^2]^+ [Y]^{n-} \quad (IIIe),$$

where n = 3;

$$[A^1]^+[M^1]^+ [Y]^{n-} \quad (IIIf),$$

where n = 2;

$$[A^1]^+[A^2]^+[M^4]^{2+} [Y]^{n-} \quad (IIIg),$$

where n = 4;

$$[A^1]^+[M^1]^+[M^4]^{2+} [Y]^{n-} \quad (IIIh),$$

where n = 4;

$$[A^1]^+[M^5]^{3+} [Y]^{n-} \quad (IIIi),$$

where n = 4; or

$$[A^1]^+[M^4]^{2+} [Y]^{n-} \quad (IIIj),$$

where n = 3 and
where $[A^1]^+$, $[A^2]^+$ and $[A^3]^+$, independently of one another, are selected from the groups mentioned for $[A]^+$, $[Y]^{n-}$ has the meaning stated under (A) and $[M^1]^+$, $[M^2]^+$, $[M^3]^+$ are monovalent metal cations, $[M^4]^{2+}$ are divalent metal cations and $[M^5]^{3+}$ are trivalent metal cations.

**2.** The process according to claim 1, wherein the solution (I) is produced by preparing the polyurethane in the ionic liquid.

**3.** The process according to claim 1, wherein the solution (I) is produced by dissolving polyurethane in ionic liquids.

**4.** The process according to claim 1, wherein the solution (I) comprises thermoplastic polyurethane.

**5.** The process according to any of claims 1 to 4, wherein the polyurethane, preferably thermoplastic polyurethane, is based on the reaction of (a) isocyanate with (b) compounds reactive toward isocyanates and having a molecular weight of from 500 g/mol to 10 000 g/mol and (c) chain extenders, optionally in the presence of (d) catalysts and/or (e) assistants.

6. The process according to claim 1, wherein ionic liquids used are 1-ethyl-3-methylimidazolium methanesulfonate, 1-ethyl-2,3-dimethylimidazolium ethylsulfate, 1-ethyl-3-methylimidazolium diethylphosphate and/or 1-ethyl-3-methylimidazolium chloride.

7. The process according to claim 1, wherein the textile substrate used is a woven fabric, knitted fabric or nonwoven based on natural or synthetic fibers.

8. The process according to claim 1, wherein the textile substrate used is a nonwoven.

9. The process according to claim 1, wherein the polyurethane is precipitated in a bath comprising water.

10. A coated textile obtainable according to any of claims 1 to 9, wherein the coated textile comprises ionic liquid.

11. The coated textile according to claim 10, wherein the coated textile is imitation leather.

**Revendications**

1. Procédé pour la fabrication de textiles revêtus, un substrat textile étant revêtu ou imbibé d'une solution (I) contenant du polyuréthane et le polyuréthane étant ensuite précipité dans ou sur le substrat textile, **caractérisé en ce qu'**on utilise, comme solution (I), du polyuréthane dissous dans un liquide ionique, le liquide ionique étant choisi dans le groupe suivait :

(A) sels de formule générale (I)

$$[A]^+_n[Y]^{n-} \quad (I),$$

dans laquelle n vaut 1, 2, 3 ou 4, $[A]^+$ représente un cation d'ammonium quaternaire, un cation d'oxonium, un cation de sulfonium ou un cation de phosphonium et $[Y]^{n-}$ représente un anion monovalent, divalent, trivalent ou tétravalent ; ou
(B) sels mixtes des formules générales (II)

$$[A^1]^+[A^2]^+[Y]^{n-} \quad (IIa),$$

dans laquelle n = 2 ;

$$[A^1]^+[A^2]^+[A^3]^+[Y]^{n-} \quad (IIb),$$

dans laquelle n = 3 ; ou

$$[A^1]^+[A^2]^+[A^3]^+[A^4]^+[Y]^{n-} \quad (IIc),$$

dans laquelle n = 4 et
$[A^1]^+$, $[A^2]^+$, $[A^3]^+$ et $[A^4]^+$ étant choisis, indépendamment les uns des autres, parmi les groupes mentionnés pour $[A]^+$ et $[Y]^{n-}$ présentant la signification mentionnée sous (A) ; ou
(C) sels mixtes des formules générales (III)

$$[A^1]^+[A^2]^+[A^3]^+[M^1]^+[Y]^{n-} \quad (IIIa),$$

dans laquelle n = 4 ;

$$[A^1]^+[A^2]^+[M^1]^+[M^2]^+[Y]^{n-} \quad (IIIb),$$

dans laquelle n = 4 ;

$$[A^1]^+[M^1]^+[M^2]^+[M^3]^+[Y]^{n-} \quad (IIIc),$$

dans laquelle n = 4 ;

$[A^1]^+[A^2]^+[M^1]^+[Y]^{n-}$ (IIId),

dans laquelle n = 3 ;

$[A^1]^+[M^1]^+[M^2]^+[Y]^{n-}$ (IIIe),

dans laquelle n = 3 ;

$[A^1]^+[M^1]^+[Y]^{n-}$ (IIIf),

dans laquelle n = 2 ;

$[A^1]^+[A^2]^+[M^4]^{2+}[Y]^{n-}$ (IIIg),

dans laquelle n = 4 ;

$[A^1]^+[M^1]^+[M^4]^{2+}[Y]^{n-}$ (IIIh),

dans laquelle n = 4 ;

$[A^1]^+[M^5]^{3+}[Y]^{n-}$ (IIIi),

dans laquelle n = 4 ; ou

$[A^1]^+[M^4]^{2+}[Y]^{n-}$ (IIIj),

dans laquelle n = 3 et
$[A^1]^+$, $[A^2]^+$ et $[A^3]^+$ étant choisis, indépendamment les uns des autres parmi les groupes mentionnés pour $[A]^+$, $[Y]^{n-}$ présentant la signification mentionnée sous (A) et $[M^1]^+$, $[M^2]^+$, $[M^3]^+$ signifiant des cations métalliques monovalents, $[M^4]^{2+}$ des cations métalliques divalents et $[M^5]^{3+}$ des cations métalliques trivalents.

2. Procédé selon la revendication 1, **caractérisé en ce qu'**on produit la solution (I) **en ce qu'**on prépare le polyuréthane dans le liquide ionique.

3. Procédé selon la revendication 1, **caractérisé en ce qu'**on produit la solution (I) **en ce qu'**on dissout le polyuréthane dans des liquides ioniques.

4. Procédé selon la revendication 1, **caractérisé en ce que** la solution (I) contient du polyuréthane thermoplastique.

5. Procédé selon l'une quelconque des revendications 1 à 4, **caractérisé en ce que** le polyuréthane, de préférence le polyuréthane thermoplastique, est basé sur la transformation (a) d'isocyanate avec (b) des composés réactifs par rapport aux isocyanates présentant un poids moléculaire entre 500 et 10.000 g/mole et (c) des agents d'allongement de chaîne, le cas échéant en présence de (d) des catalyseurs et/ou (e) des additifs.

6. Procédé selon la revendication 1, **caractérisé en ce qu'**on utilise, comme liquides ioniques, du méthanesulfonate de 1-éthyl-3-méthylimidazolium, de l'éthylsulfate de 1-éthyl-2,3-diméthylimidazolium, du diéthylphosphate de 1-éthyl-3-méthylimidazolium et/ou du chlorure de 1-éthyl-3-méthylimidazolium.

7. Procédé selon la revendication 1, **caractérisé en ce qu'**on utilise, comme substrat textile, un tissu, un tricot ou un non-tissé à base de fibres naturelles ou synthétiques.

8. Procédé selon la revendication 1, **caractérisé en ce qu'**on utilise un non-tissé comme substrat textile.

9. Procédé selon la revendication 1, **caractérisé en ce qu'**on précipite le polyuréthane dans un bain contenant de l'eau.

10. Textile revêtu pouvant être obtenu selon l'une quelconque des revendications 1 à 9, **caractérisé en ce que** le textile revêtu contient un liquide ionique.

**11.** Textile revêtu selon la revendication 10, **caractérisé en ce que** le textile revêtu est un cuir synthétique.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1110607
- DE 10202838 A1


### In der Beschreibung aufgeführte Nicht-Patentliteratur


- **W. SCHRÖER.** *Textilveredlung,* 1987, vol. 22 (12), 459-467
- **HARRO TRÄUBEL.** New Materials Permeable to Water Vapor. Springer Verlag, 1999, 42-63
- **K. WALTER ; U. LOOSE ; G. HEBESTREIT.** Herstellung von Polyurethanen in Lösung für die Kunstlederindustrie. *Leder Schuhe Lederwaren,* 1990, 172-177
- **M. STOLL.** Verfahren zur Herstellung poröser Polymerschichten nach dem Koagulationsverfahren. *Coating,* 1994, 9-11
- **W. SCHRÖER.** Die Beschichtung von Textilien mit Polyurethanen. *Textilveredlung,* 1987, 459-467
- *Angew. Chem.,* 2000, vol. 112, 3926-3945
- **W. SCHRÖER.** Textilveredlung. 1987, vol. 22, 467